(19) Europäisches Patentamt
European Patent Office
Office européen des brevets

(11) EP 2 555 099 A1

(12) **EUROPEAN PATENT APPLICATION**
published in accordance with Art. 153(4) EPC

(43) Date of publication:
**06.02.2013 Bulletin 2013/06**

(21) Application number: **11758952.3**

(22) Date of filing: **08.03.2011**

(51) Int Cl.:
***G06F 3/048*** *(2013.01)*

(86) International application number:
**PCT/JP2011/001361**

(87) International publication number:
**WO 2011/118140 (29.09.2011 Gazette 2011/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2010 JP 2010072032**

(71) Applicant: **Panasonic Corporation**
**Kadoma-shi**
**Osaka 571-8501 (JP)**

(72) Inventor: **TAKASHIMA, Fukashi**
**Chuo-ku,**
**Osaka 540-6207 (JP)**

(74) Representative: **Grünecker, Kinkeldey, Stockmair & Schwanhäusser**
**Leopoldstrasse 4**
**80802 München (DE)**

# (54) DISPLAY CONTROL PROCESSING DEVICE, DISPLAY CONTROL PROCESSING METHOD AND DISPLAY CONTROL PROCESSING PROGRAM

(57) A display control processing device, a display control processing method and a display control processing program are provided so that when a user performs a scaling up or down operation on items, even if the display magnification factor of the items is not the maximum or the minimum, detailed information of the items can be displayed and controlled in an optimal form for the user. The display control processing device includes a hard disk (102) for storing basic layout information of items, an input section (106) for receiving an input related to scaling up or down of the items, a display control section (101) for determining the number of rows and the number of columns for a plurality of items to be displayed, an item data layout calculating section (104) for determining, based on the determined number of rows and number of columns and the basic layout information of the items, for each of the items, data arrangement information including display or non-display information and display position for each display data, and a display control section (101) for displaying a plurality of items based on the data arrangement information changed by the item data layout calculating section (104).

*FIG. 2*

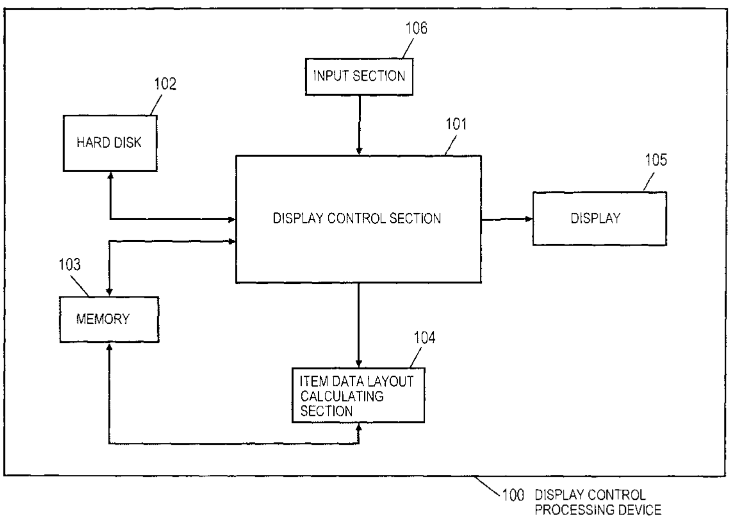




Printed by Jouve, 75001 PARIS (FR)

## Description

Technical Field

The present invention relates to a display control processing device, a display control processing method, and a display control processing program which display a plurality of items containing a plurality of display data in a matrix format.

Background Art

Traditionally, a technique for displaying a plurality of items containing a plurality of display data recorded in a computer in a matrix format using thumbnail view is put into practical use. In order to improve a user's convenience, a technique for displaying items by combining thumbnail view (display data such as image information) and text view (display data such as detailed information) as display data is also proposed.

Further, a technique is proposed which makes it possible to enlarge and display items and displays the detailed information of the items in text in addition to the thumbnail view when an enlarging operation is performed so that the thumbnail view of the selected item may be displayed on the whole screen (for example, refer to Patent Literature 1).

A technique is also proposed which prepares a plurality of display styles (for example, thumbnail view (big, medium and small) style and text view style) for a certain item, and changes the display style with the operation of a slide bar (for example, refer to Patent Literature 2).

Citation List

Patent Literature

Patent Literature 1: Japanese Patent No. 4352518
Patent Literature 2: JP-A-2008-234457

Summary of Invention

Technical Problem

However, there are the following problems in the related techniques mentioned above.

First, in the technique described in Patent Literature 1, in order to display the detailed information of the selected item, it is necessary to perform an enlarging operation until the thumbnail view of the selected item spreads on the whole screen.

In the technique described in Patent Literature 2, in order to display the detailed information of the items, it is necessary to perform a reducing operation by operating the slide bar until the thumbnail view of the selected display data becomes a list view.

That is, in either technique, in order to refer to the detailed information of the items, unless the user makes the display magnification factor of the displayed items to be the maximum or the minimum, the detailed information on the items cannot be displayed.

In view of the above problems, an object of the present invention is to provide a display control processing device, a display control processing method and a display control processing program so that when a user performs a scaling up or down operation on items, even if the display magnification factor of the items is not the maximum or the minimum, a plurality of display data of the items can be displayed and controlled in an optimal form for the user.

Solution to Problem

A display control processing device according to the present invention corresponds to a display control processing device for displaying a plurality of items containing a plurality of display data in a matrix format, the device including: a storage section which is adapted to store basic layout information on items containing display or non-display information, display position, and size of each of the display data for every number of rows or every number of columns; an input section which is adapted to receive an input at least on scaling up or down of the items; a display control section which is adapted to determine the number of rows and the number of columns for the plurality of items to be displayed, based on an input to the input section; an item data layout calculating section which is adapted to calculate data arrangement information containing the display or non-display information, the display position, and the size of each of the display data for each of the items based on the number of rows and the number of columns determined by the display control section and the basic layout information on items; and a display section which is adapted to display the plurality of items, wherein the display control section causes the plurality of items to be displayed on the display section based on the data arrangement information changed by the item data layout calculating section in accordance with change of the number of rows and the number of columns.

A display control processing method according to the present invention corresponds to a display control processing method for displaying a plurality of items containing a plurality of display data in a matrix format by using a display control processing device which includes a storage section that is adapted to store basic layout information on items containing display or non-display information, display position, and size of each of the display data for every number of rows or every number of columns, the method including: an input step of receiving an input at least on scaling up or down of the items; a display control step of determining the number of rows and the number of columns for the plurality of items to be displayed, based on an input in the input step; an item data layout calculating step of calculating data arrangement information containing the display or non-display information, the display position, and the size of each of the display data for each of the items based on the number of rows and the number of columns determined by the display control step and the basic layout information on the items; and a display step for displaying the plurality of items based on the data arrangement information changed by the item data layout calculating section in accordance with change of the number of rows and the number of columns.

Further, a display control processing program according to the present invention corresponds to a display control processing program for displaying a plurality of items containing a plurality of display data in a matrix format by using a computer which includes a storage section which is adapted to store basic layout information on items containing display or non-display information, display position, and size of each of the display data for every number of rows or every number of columns, the program causing the computer to perform the following steps: an input step of receiving an input at least on scaling up or down of the items; a display control step of determining the number of rows and the number of columns for the plurality of items to be displayed, based on an input in the input step; an item data layout calculating step of calculating data arrangement information containing the display or non-display information, the display position, and the size of each of the display data for each of the items based on the number of rows and the number of columns determined by the display control step and the basic layout information on the items; and a display step of displaying the plurality of items based on the data arrangement information changed by the item data layout calculating section in accordance with change of the number of rows and the number of columns.

Advantageous Effects of Invention

According to the present invention, the display control processing device, the display control processing method and the display control processing program can be provided so that when a user performs a scaling up or down operation on items, even if the display magnification factor of the items is not the maximum or the minimum, a plurality of display data of the items can be displayed and controlled in an optimal form for the user.

Brief Description of Drawings

In Fig. 1(a) to (d) are diagrams which show fundamental examples of screen display operations of a display control processing device in a first embodiment of the invention.

Fig. 2 is a block diagram which shows a structure of the display control processing device in the first embodiment.

In Fig. 3(a) and (b) are diagrams for describing in detail the relation of a display screen which the display control processing device displays and the coordinate data of an item list.

In Fig. 4(a) to (c) are tables for describing information which a storage section of the display control processing device in the first embodiment stores.

In Fig. 5(a) and (b) are diagrams which show images at the time of forming the layout for each of the inside display data of an item according to the basic layout information on the item.

In Fig. 6(a) to (g) are tables for describing other information which the display control processing device in the first embodiment handles.

Fig. 7 is a diagram which shows an image at the time of forming the layout in an item list region according to display data information shown by (c) in Fig. 4 and data arrangement information shown by (c) in Fig. 6.

Fig. 8 is a flow chart which shows processes of the display control processing device in the first embodiment.

Fig. 9 is a table which shows an example of the touch panel information in the state of Fig. 1(b).

In Fig. 10(a) to (e) are tables which show an example of item list region information, coordinates of the selected item, data arrangement information, magnification factor control information, and touch panel information in the state of (c) in Fig. 1.

In Fig. 11(a) to (e) are tables which show an example of item list region information, coordinates of the selected item, data arrangement information, magnification factor control information, and touch panel information in the state of (d) in Fig. 1.

Fig. 12 is a block diagram which shows the structure of a display control processing device in a second embodiment.

In Fig. 13(a) to (d) are diagrams for describing screen display operations of the display control processing device in the second embodiment.

In Fig. 14(a) to (c) are tables for describing information which a movement amount calculating section of the display control processing device in the second embodiment calculates.

In Fig. 15(a) to (c) are diagrams which show images when a display control section makes screen outputs of the item list region to a display according to movement amounts X and Y.

In Fig. 16(a) to (c) are diagrams which show an example of screen output when a display position determination form is "centering".

In Fig. 17(a) to (f) are diagrams which show an example of screen output when the display position determination form is "centering termination".

Fig. 18 is a flow chart which shows processes which the display control processing device in the second embodiment performs at the time of the screen display operations.

Fig. 19 is a flow chart which shows subroutine processes which describe movement amount calculating processes which a movement amount calculating section performs in Step S119.

Fig. 20 is a block diagram which shows the structure of a display control processing device in a third embodiment.

Fig. 21 is a flow chart which shows processes which the display control processing device in the third embodiment performs at the time of the screen display operations.

In Fig. 22(a) and (b) are diagrams which show the example of screen display operations of the display control processing device in the third embodiment.

In Fig. 23(a) to (e) are diagrams which show the example of a series of screen display operations of the display control processing device in the third embodiment.

Modes for Carrying out Invention

(First Embodiment)

First, a display control processing device in a first embodiment of the invention is described in detail using the figures.

Figs. 1(a) to 1(d) are diagrams which show fundamental examples of screen display operations of the display control processing device in the first embodiment of the invention.

A plurality of items 201 containing a plurality of display data are displayed on a display screen 200 of the display control processing device in a matrix format. An item indicates a region in which display data about a certain object, such as a thumbnail view or a text view, are displayed on the display screen 200. By selecting an item, a user can select an object displayed with the item. The shape of an item is not limited to the rectangular shape shown in Figs. 1(a) to 1 (d). The display format in which items are arranged in the lengthwise direction and in the transverse direction is described as a matrix format.

Under the display screen 200, a slide bar 202 is provided, and a control 203 is displayed on the slide bar 202. In the example of Fig. 1(a), a thumbnail view which displays picture information is given to an item 201, and the user can select a desired item 201 on the display screen 200. An item which is selected is described as a selected item 206 (Fig. 1(a).

The user can change the magnification factor of the items 201 by moving the control 203 with a finger (Figs. 1 (b) and 1(c)).

If the magnification factor of the items 201 is increased to some extent, a plurality of display data related to a certain object, specifically a thumbnail view 204 and a text view 205 which displays detailed information, will be displayed on an item 201 (Figs. 1(c) and 1(d)).

Then, the structure of the display control device of the embodiment is described.

Fig. 2 is a block diagram which shows the structure of a display control processing device 100 in the first embodiment of the invention. As shown in Fig. 2, the display control processing device 100 includes an input section 106, a display control section 101, an item data layout calculating section 104, a hard disk 102, a memory 103, and a display 105.

For example, a touch panel device can be used as the input section 106. The input section 106 outputs the details of an operation which a user performs to the display control section 101 as input information. The input section 106 can receive an input at least on scaling up or down of the items 201.

The hard disk 102, which is a storage section, stores basic display information on an item list, basic layout information on items, and display data information, which are fundamental information for displaying the items 201 which will be described later (refer to Figs. 4(a) to 4(c)). The storage section is not limited to the hard disk 102, but other publicly known recording media can be used.

The memory 103 is connected to the display control section 101 and the item data layout calculating section 104, and temporarily stores the outputs of the display control section 101 and the item data layout calculating section 104.

The display control section 101 converts the input information from the input section 106 to touch panel information to be described later, and determines a selected item 206 based on the touch panel information. The display control section 101 calculates item list region information which is described later and which is information containing the number of rows and the number of columns in the case of displaying a plurality of items 201 based on the input to the input section 106 (refer to Fig. 6(a)). The display control section 101 displays a plurality of items 201 (it is also described as an item list) on the display 105 based on data arrangement information (refer to Fig. 6(c)) which is changed by the item data layout calculating section 104 in accordance with the change of the calculated number of rows and number of columns.

The display 105 which is a display section is controlled by the display control section 101, and displays the display screen 200 containing the plurality of items 201. Various kinds of publicly known display devices can be used as the display section.

The item data layout calculating section 104 is controlled by the display control section 101, and calculates the data arrangement information which include the display position, the size, and the display or non-display information (display or not) for every display data for every item 201 in accordance with the change of the number of rows and the number of columns calculated by the display control section 101.

Here, the relation between the display screen 200 which the display control processing device 100 displays and the coordinate data of the item list, which is used in the description of the embodiment of the invention, is described in detail.

Figs. 3(a) and 3(b) are diagrams for describing in detail the relation of the display screen 200 which the display control processing device 100 displays and the coordinate data of the item list.

The coordinate data of the item list including a plurality of items 84 is created by assuming the following regions. In Figs. 3(a) and 3(b), the region of the whole item list is described as an item list region 82, the region output to the display 105 among the item list regions 82 is described as a display region 81 of the display, and the display region for displaying a slide bar 85 containing a control 86 is described as a display region 83 of the slide bar.

An item which is selected by the user is a selected item 88, and the control 86 is displayed on the slide bar 85. The data of the region included in the display region 81 of the display among the item list regions 82 are displayed on the display 105 by the display control section 101, and corresponds to the display screen 200. In the example of Fig. 3 (a), since the item list region 82 and the display region 81 of the display are substantially equal, the entire item list region 82 is displayed on the display 105. In the example shown in Fig. 3(b), since the item list region 82 is larger than the display region 81 of the display, the region which overlaps with the display region 81 of the display among the item list regions 82 is displayed on the display 105 together with the slide bar 85 as the display screen 200.

Next, the information which the hard disk 102 stores are described. Figs. 4(a) to 4(c) are tables for describing the information which the storage section of the display control processing device 100 in the first embodiment of the invention stores.

The basic display information on an item list shown in Fig. 4(a) is fundamental information which shows how the item list is displayed on the display 105. A display region size of the display indicates the width and the height (unit: dot) of the display region 81 of the display, and it is shown in the figure that the width is "480 dots" and the height is "654 dots". A display region information of the slide bar indicates the starting coordinates, the width and the height (unit: dot) of the display region 83 of the slide bar, with the upper left of the display region 81 of the display as the origin, and it is shown in the figure that, the X coordinate is "0 dot", the Y coordinate is "654 dots", the width is "480 dots", and the height is "100 dots".

A default number of display columns indicates the number of columns applied to the first time display of an item list, and it is shown in the figure that the number of columns of the item list region in the first time display is "three". A maximum number of displayable columns indicates the maximum number of columns which can be displayed when the display control section 101 changes the numbers of rows and columns of the item list region 82, and it is shown in the figure that the number of columns which can be displayed in the item list region 82 is from "one" to "four". An item number indicates the number of items which the item list region 82 has, and it is shown in the figure that the number of items to be displayed is "10".

Next, with reference to Fig. 4(b), the basic layout information on items indicates with what kind of layout the display data which the items 84 hold are displayed, and includes the display or non-display information, the display position, and the size for every display data. These are defined for every number of columns, or every number of rows of the item list region 82. Each value is expressed with a ratio when a current item size (width) described later is set to "1". In Fig. 4(b), when the number of columns is "3", the ratio of the current item size (height) is "1", in display data 1, the ratio of X is "0.1", the ratio ofY is "0.1", the ratio of width is "0.8" and the ratio of height is "0.8", in display data 2, values (shown as "-" henceforth) which show non-display are shown, and in display data 3, values "-" are also shown. The data values for 1 column, 2 columns and 4 columns are also shown in the same way as 3 columns. Figs. 5(a) and 5(b) show images when the item data layout calculating section 104 which is described later forms the layout of the display data inside the items 84 according to the basic layout information of items if the number of columns is "3" when the current item size (width) is "1" (Fig. 5(a)), and when the current item size (width) is "100" (Fig. 5(b)).

With reference to Fig. 4(c), the display data information indicates the type and the content of the display data (thumbnail information, text information or the like) associated with the items 84. In the figure, the display data corresponding to items from an item number "1" to an item number "10" are expressed, and it is shown that for the display data 1 of the item 1, the type is a bit map (BMP) and the content is a data string of bit map body, for the display data 2, the type is a text and the content is a text string of "file name 1", and for the display data 3, the type is a text and the content is a text string of "detailed information 1". The remaining item numbers "2" to "10" are shown in the same way as the item number "1".

Next, other information which the display control processing device 100 handles are described. Figs. 6(a) to 6 (g) are tables for describing other information which the display control processing device 100 in the first embodiment of the invention handles.

With reference to Fig. 6(a), a current item size ((width) and (height)) in the item list region information shows the width and the height per item, and it is shown in the figure that the width is "160 dots" and the height is "160 dots." Current numbers of rows and columns ((rows) and (columns)) show the numbers of rows and columns in the item list region 82, and it is shown in the figure that four rows and three columns are displayed. A current item list region size ((width) and (height)) shows the width and the height of the item list region 82, and it is shown in the example of the figure that the width is "480 dots" and the height is "640 dots".

Next, with reference to Fig. 6(b), coordinates ((X coordinate) and (Y coordinate)) of the selected item indicate the coordinates of the selected item 88 with the upper left of the item list region 82 as the origin, and it is shown in the example of the figure that the X coordinate of the selected item 88 is "zero dot", and the Y coordinate is "480 dots".

With reference to Fig. 6(c), data arrangement information indicates the display position, the size, and the display or non-display information of the display data associated with the items 84 with the upper left of the item list region 82 as the origin, and it is shown in the figure that the X coordinate and the Y coordinate of the display data 1 in the item 1 are both "16 dots", and the width and the height are both "128 dots", and the display data 2 and the display data 3 are all "-" which indicates non-display, and the items 2 to 10 are shown similarly to the item 1. An image when the display control section 101 forms the layout of the item list region 82 according to the display data information shown in Fig. 4 (c) and the data arrangement information shown in Fig. 6(c) is shown in Fig. 7. The selected item 88 is shown in Fig. 7.

With reference to Fig. 6(d), a default item size (width) indicates the width per item of the item list in the first time display, and it is shown in the figure that the width is "160 dots".

With reference to Fig. 6(e), a maximum magnification factor, a minimum magnification factor, and a current magnification factor are included in magnification factor control information. The current magnification factor indicates the display magnification per item to the default item size (width) at the time of displaying an item list, and "1" is set at the first time of displaying the item list. The maximum magnification factor and the minimum magnification factor indicate the maximum value and the minimum value of the current magnification factor which can be used when the items 84 are scaled and displayed, and it is shown in the figure that the maximum magnification factor is "3" and the minimum magnification factor is "0.75".

With reference to Fig. 6(f), a selected item indicates with a number the selected item 88 which is selected by a user, and it is shown in the figure that the item which is selected is the 10th item since the selected item is "10".

With reference to Fig. 6(g), touch panel information indicates a place which is output from the input section 106 and where the touch panel device is touched, and the X and Y coordinates with the upper left of the display region 81 of the display as the origin and the state of a finger is expressed. The values set to the state of a finger may be "press" which means that the finger touches the touch panel device, "slide" which shows that the finger is moved in a state that the finger touches on the touch panel device, and "release" which shows that the finger is separated from the touch panel device, and it is shown in the figure that the X coordinate and the Y coordinate are values (for example, "-1" and this value is used henceforth) which show that there is no input from the input section 106 which is described later, and the state of a finger is "release".

Each of these information is calculated and determined by the display control section 101 or the item data layout calculating section 104.

Next, operations of the display control processing device 100 are described. Fig. 8 is a flow chart which shows processes of the display control processing device 100 in the first embodiment.

The display control section 101 first reads out the basic display information on an item list, the basic layout information on items, and the display data information held in the hard disk 102 beforehand into the memory 103 (Step S101). Here, the values shown in Figs. 4(a) to 4(c) shall be read.

Next, the display control section 101 acquires a memory area for storing the basic display information on an item list and the basic layout information on items, the display data information, the item list region information, the coordinates of the selected item, the data arrangement information, the default item size (width), the magnification factor control information, the selected item, and the touch panel information (Step S102).

Next, the display control section 101 writes the basic display information on an item list, the basic layout information on items and the display data information, which are read out from the hard disk 102, into the memory area which is acquired in Step S102 (Step S103). In the touch panel information, the X coordinate and the Y coordinate are set to "-1", and the state of a finger is initialized as "release", and each of these values is written into the memory area which is acquired in Step S102.

Next, the display control section 101 calculates the default item size (width) according to the following formula using the display region size (width) of the display and the default number of display columns in the basic display information on an item list (Step S104).

Default item size (width) = display region size (width) of the display /default number of display columns

Here, the display region size (width) of the display and the default number of display columns are values written in the memory 103 in Step S103, that is, "480 dots" and "3" shown in Fig. 4(a). If the default item size (width) is calculated using these values, the default item size (width) will become as follows.

$$\text{Default item size (width)} = 480 / 3 = 160$$

This value corresponds to the value shown in Fig. 6(d), and the display control section 101 writes this value into the memory area which is acquired in Step S102.

Next, the display control section 101 initializes the selected item 88. It is initialized as "10" for example, and this value corresponds to the example shown in Fig. 6(f), and the display control section 101 writes this value into the memory area which is acquired in Step S102 (Step S105).

Next, the display control section 101 calculates the magnification factor control information as follows using the default item size (width), and the display region size (width) of the display, the default number of display columns, and the maximum number of display columns in the basic display information on an item list (Step S106).

When the maximum magnification factor, the minimum magnification factor, and the current magnification factor in the magnification factor control information are to be calculated, the magnification factor for n columns (where n is assumed as a natural number which is equal to or larger than one) can be obtained with the following formulas.

$$\text{Magnification factor for n columns} = \text{display region size (width) of the display} / \text{default item size (width)} / n$$

When the minimum magnification factor is calculated, since the value of the maximum number of displayable columns which is written into the memory in Step S103 is "4" shown in Fig. 4(a), the minimum magnification factor becomes the magnification factor for 4 columns, and since the default item size (width) is "160 dots" from the above-mentioned calculation result, the minimum magnification factor is calculated as follows.

$$\text{Minimum magnification factor} = 480 / 160 / 4 = 0.75$$

The maximum magnification factor is calculated as follows by using the magnification factor of one column.

$$\text{Maximum magnification factor} = 480 / 160 / 1 = 3$$

When the current magnification factor is calculated, since the value of the default number of display columns which is written in the memory in Step S103 is "3" shown in Fig. 4(a), the current magnification factor is calculated as follows using the magnification factor for three columns, and becomes "1."

$$\text{Current magnification factor} = 480 / 160 / 3 = 1$$

These values corresponds to the values shown in Fig. 6(e), and the display control section 101 writes these values into the memory area which is acquired in Step S102.

Next, the display control section 101 calculates the item list region information and the coordinates of the selected item as follows based on the display region size (width) and the number of items in the basic display information of an item list, and the ratio of the current item size (height) in the basic layout information on items which are written into the memory 103 in Step S103, and the default item size (width) which is written into the memory 103 in Step S104 or the selected item written into the memory 103 in Step S116 described later (Step S107).

The current item size ((width) and (height), the current numbers of rows and columns ((rows) and (columns)) and the current item list region size ((width) and (height)) in the item list region information can be determined using the following formulas, respectively.

Current item size (width) = default item size (width) x current magnification factor

Current numbers of rows and columns (columns) = display region size (width) of the display / current item size (width)

Current numbers of rows and columns (rows) = number of items / current numbers of rows and columns (column) (* the first number after the decimal point is rounded up)

Current item size (height) = ratio of the current item size (height) applicable to the current number of columns x current item size (width)

Current item list region size (width) = current numbers of rows and columns (column) x current item size (width)

Current item list region size (height) = current numbers of rows and columns (row) x current item size (height)

Row at which the selected item is placed = {(the selected item - 1) / current numbers of rows and columns (column)} + 1

Column at which the selected item is placed = {(the selected item -1) % current numbers of rows and columns (column)} + 1

X coordinate of the selected item = (column at which the selected item is placed - 1) x current item size (width)

Y coordinate of the selected item = (row at which the selected item is placed - 1) x current item size (height)

The default item size (width) is the value which is written into the memory 103 in Step S104, that is, "160 dots" shown in Fig. 6(d), the current magnification factor is the value which is written into the memory in Step S105, that is, "1" shown in Fig. 6(e), and the display region size (width) of the display is the value which is written into the memory in Step S103, that is, "480 dots" shown in Fig. 4(a). The current item size (width), the current numbers of rows and columns (column), and the current numbers of rows and columns (row), which are calculated using these values, become as follows.

$$\text{Current item size (width)} = 160 \text{ x } 1 = 160$$

$$\text{Current numbers of rows and columns (column)} = 480 / 160 = 3$$

$$\text{Current numbers of rows and columns (row)} = 10 / 3 = 4$$

In the calculation of the current item size (height), since the current numbers of rows and columns (column) is "3" from the above-mentioned calculation result, the value written in the memory in Step S103, that is, the value of the ratio of the current item size (height) shown in Fig. 4(b) for "three rows", that is, "1" is referred to, and since the current item size (width) is "160" from the above-mentioned calculation result, the current item size (height) which is calculated using these values becomes as follows.

$$\text{Current item size (height)} = 1 \text{ x } 160 = 160$$

In the calculation of the current item list region size ((width) and (height)), since from the above-mentioned calculation result, the current numbers of rows and columns (row) is "four", the current numbers of rows and columns (column) is "three", the current item size (width) is "160 dots" and the current item size (height) is "160 dots", the current item list region size ((width) and (height)) which is calculated using these values become as follows.

$$\text{Current item list region size (width)} = 3 \text{ x } 160 = 480$$

$$\text{Current item list region size (height)} = 4 \text{ x } 160 = 640$$

In the calculation of the coordinate values of the selected item, since the selected item is the value written in the memory in Step S105, that is, "10" shown in Fig. 6(f) in the description of the present fundamental screen display operation, and the current numbers of rows and columns (column) is "three" from the above-mentioned calculation result, the row and column at which the selected item is placed, which are calculated using these values, become as follows, respectively.

$$\text{Row at which the selected item is placed} = \{(10 - 1) / 3\} + 1 = 4$$

$$\text{Column at which the selected item is placed} = \{(10 - 1) \% 3\} + 1 = 1$$

Since the current item size (width) is "160 dots", the current item size (height) is "160 dots", the row at which the selected item is placed is "4" and the column at which the selected item is placed is "1" from the above-mentioned calculation result, the X coordinate and the Y coordinate of the selected item, which are calculated using these values, become as follows, respectively.

X coordinate of the selected item = (1 - 1) x 160 = 0

Y coordinate of the selected item = (4 - 1) x 160 = 480

The above-mentioned values which are obtained with the above calculations corresponds to the values shown in Figs. 6(a) to 6(g), and these values are written into the memory area which is acquired in Step S102.

Next, based on the number of items in the basic display information on an item list and the data of the basic data arrangement information applicable to the current numbers of rows and columns (column) of the basic layout information on items which are written in the memory 103 in Step S103, and the current numbers of rows and columns (column), the current item size (width) and the current item size (height) which are written in the memory 103 in Step S107, the item data layout calculating section 104 calculates the values of data arrangement information for the items as follows (Step S108).

First, in order to determine the layouts of the display data per item, the X coordinate, the Y coordinate, the width and the height of each display data inside an item are obtained with the following formulas. In order to form the layouts adapted to the current number of columns, for the layouts of the display data in an item list region, the values of the basic data arrangement information applicable to the current numbers of rows and columns (column) are used for the values of the basic data arrangement information used in the formulas.

X coordinate = X in the basic data arrangement information x current item size (width)

Y coordinate = Y in the basic data arrangement information x current item size (width)

Width = width in the basic data arrangement information x current item size (width)

Height = Height in the basic data arrangement information x current item size (width)

Next, the layouts of the display data inside the items determined above are arranged in a matrix format in the item list region, and the coordinate information of the display data obtained in this case is determined as the X coordinates and Y coordinates of the display data which the items hold. As a calculation, the X coordinate and the Y coordinate are obtained with the following formulas, and the width and the height are equivalent to the values already calculated with the above-mentioned formulas.

The X coordinate and the Y coordinate of the display data which the n-th item (n is a natural number which is equal to or larger than one) of an item list region holds are obtained with the following formulas.

Row at which the n-th item is placed = {(n-1) / current numbers of rows and columns (column)} + 1

Column at which the n-th item is placed = {(n-1) % current numbers of rows and columns (column)} + 1

X coordinate = X coordinate obtained with the above-mentioned formula + {current item size (width) x (column at which the n-th item is placed - 1)}

Y coordinate = Y coordinate obtained with the above-mentioned formula + {current item size (height) x (row at which the n-th item is placed - 1)}

When the above-mentioned calculations are performed, for the display data in which the value ("-" in the present example) which indicates non-display is stored in the basic data arrangement information, the above-mentioned calculations are not performed but a value ("-" in the present example) which indicates non-display similarly is stored in the X coordinate, the Y coordinate, the width and the height of the display data in the data arrangement information.

Next, the item data layout calculating section 104 writes the layout values of the display data of the items determined by the above into the memory area which is acquired in Step S102 as the data arrangement information.

As mentioned above, the display data associated with the items, as shown in the basic layout information on items in Fig. 4(b), are the display data 1, the display data 2, and the display data 3. The current number of rows and columns (or columns) is the value written into the memory in Step S107, that is, "three" shown in Fig. 6(a). In the values of the basic data arrangement information, the values of the basic data arrangement information applicable to the number of columns "3" are used, and the ratios of X, Y, width and height of the display data 1 at the time of setting the current item size (width) to 1, as shown in Fig. 4(b), become "0.1", "0.1", "0.8" and "0.8", respectively, X, Y, width and height of the display data 2 are all"-", and X, Y, width and height of the display data 3 are all"-". Since the current item size (width) is the value written into the memory in Step S107, that is, "160 dots" shown in Fig. 6(d), the X coordinates, the Y coordinates, the widths and the heights of the display data 1, 2 and 3 inside an item, which are calculated using these values, become as follows.

Display data 1:

$$X \text{ coordinate} = 0.1 \times 160 = 16$$

$$Y \text{ coordinate} = 0.1 \times 160 = 16$$

$$\text{Width} = 0.8 \times 160 = 128$$

$$\text{Height} = 0.8 \times 160 = 128$$

Display data 2 and display data 3:

X coordinate = "-"

Y coordinate = "-"

Width = "-"

Height = "-"

With the above-mentioned calculation results, the image at the time of forming the layout of the display data inside an item becomes what is shown in Fig. 5(b) when the current item size (width) is 160.

Next, the current item size (height) is the value written into the memory in Step S107, that is, "160 dots" shown in Fig. 6(a), the number of items is the value written into the memory in Step S103, that is, "10" in Fig. 4(a), and the X coordinates, the Y coordinates, the widths and the heights of the display data 1, the display data 2 and the display data 3 which are associated with the items from the item 1 to the item 10, are calculated using these values. The calculation result for the items 1 and 10 becomes as follows, and the items from the item 2 to the item 9 are also calculated in the same way.

(Item 1)
Row at which the 1st item is placed = {(1 - 1) / 3} + 1 = 1
Column at which the 1st item is placed = {(1 1) % 3} + 1 = 1
Display data 1:

$$\text{X coordinate} = 16 + \{160 \text{ x } (1\text{-}1)\} = 16$$

$$\text{Y coordinate} = 16 + \{160 \text{ x } (1\text{-}1)\} = 16$$

$$\text{Width} = 128$$

$$\text{Height} = 128$$

Display data 2 and display data 3:

$$\text{X coordinate} = \text{"-"}$$

$$\text{Y coordinate} = \text{"-"}$$

$$\text{Width} = \text{"-"}$$

$$\text{Height} = \text{"-"}$$

....
(Item 10)
Row at which the 10th item is placed = {(10 - 1) / 3} + 1 = 4
Column at which the 10th item is placed = {(10 - 1) % 3} + 1 = 1
Display data 1:

$$\text{X coordinate} = 16 + \{160 \text{ x } (1 - 1)\} = 16$$

$$\text{Y coordinate} = 16 + \{160 \text{ x } (4 - 1)\} = 496$$

$$\text{Width} = 128$$

$$\text{Height} = 128$$

Display data 2 and display data 3:

$$\text{X coordinate} = \text{"-"}$$

$$\text{Y coordinate} = \text{"-"}$$

$$\text{Width} = \text{"-"}$$

$$\text{Height} = \text{"-"}$$

The layout values of the display data of the items determined by the above correspond to the values of the data arrangement information shown in Fig. 6(c), and the item data layout calculating section 104 writes these values into the memory area which is acquired in Step S102 as the data arrangement information.

With the above-mentioned calculation result, the image at the time of forming the layout of an item list region becomes what is shown in Fig. 7.

Next, the display control section 101 carries out a screen display of the display data inside the display data information written in the memory 103 in Step S103 on the display 105 according to the data arrangement information which are written into the memory 103 in Step S108 (Step S109).

As a result of the calculating processes mentioned above, a screen image output to the display 105 corresponds to Fig. 1(a).

Next, the screen display operation of the display control processing device 100 when a user performs an enlarging operation on the items and changes the current numbers of rows and columns is described. As a precondition, the values on the memory area which is acquired in Step S102 shall correspond to the values recorded in Figs. 4(a) to 4(c), and Figs. 6(a) to 6(g) as described by the above, and the display screen 200 as shown in Fig. 1(a) shall be displayed on the display 105. The enlarging operation which a user performs on the items 201 is described by assuming that a finger is moved from coordinates (54, 660) to (107, 660) on the display region of a slide bar.

First, the input section 106 determines whether the user performs an input operation (Step S110). In the determination of Step S110, when it is determined that an input operation is performed, the input section 106 outputs the input information to the display control section 101.

On the other hand, in the determination of Step S110, if the input section 106 determines that a user does not perform an input operation, the flow returns to Step S110.

The display control section 101 converts the position of the finger on the touch panel device to coordinate values with the upper left of the display region 81 of the display as the origin based on the information input from the input section 106, and the coordinate values correspond to the X coordinate and the Y coordinate in the touch panel information. Further, in the touch panel information, the state of a finger is considered as "press" when the finger touches the touch panel device, is considered as "slide" when the finger is moved in a state that the finger touches on the touch panel device, and is considered as "release" when the finger is separated from the touch panel device. The touch panel information obtained in this way is written into the memory area which is acquired in Step S102 (Step S111),

The display control section 101 determines whether the user's operation is performed on the display region 83 of the slide bar, based on the X coordinate and the Y coordinate in the touch panel information which are written into the memory 103 in Step S111, and the display region size of the display and the slide bar display region information in the basic display information on an item list which are written in the memory 103 in Step S103 (Step S112). When it is determined in the determination of the step S112 that the user's operation is performed on the display region 83 of the slide bar, the display control section 101 writes the current magnification factor, which is calculated as follows in a range from the maximum magnification factor to the minimum magnification factor in the magnification factor control information, based on the touch panel information written into the memory 103 in Step S111 and the magnification factor control information written into the memory 103 in Step S106, into the memory area which is acquired in Step S102 (Step S115).

For example, by using the following formula, the current magnification factor can be calculated in a range from the maximum magnification factor to the minimum magnification factor.

Current magnification factor = (maximum magnification factor - minimum magnification factor) x ((X coordinate in the touch panel information) / (width of the slide bar display region information - 1)) + (minimum magnification factor)

On the other hand, when it is determined in Step S112 that operation is not performed on the display region 83 of the slide bar, the display control section 101 determines whether the operation is performed on the display region 81 of the display (Step 5113). When it is determined in the determination of the step S113 that the operation is performed on the display region 81 of the display, the display control section 101 obtain the item which the user selects based on the X coordinate and the Y coordinate in the touch panel information, the current item size and the current numbers of rows and columns in the item list region information and the number of items in the basic display information on an item list, and writes the item into the memory area which is acquired in Step S102 as the selected item (Step S116).

On the other hand, when it is determined in Step S113 that the operation is not performed on the display region 81 of the display, the display control section 101 determines whether the operation is an operation of urging the end of processes (Step S114). When the operation is an operation of urging the end of processes in the determination of this step S114, the processes of the display control processing device 100 in the first embodiment end, and when the operation is not an operation of urging the end of processes, the control is returned to the input section 106, and the flow proceeds to Step S110.

Next, based on the contents described above, when a user performs an enlarging operation on the items 84, a specific example of the screen display operation which the display control processing device 100 in the first embodiment performs becomes as follows.

First, the operation when the user's finger touches the position of coordinates (54, 660) is described (Fig. 1(b)).

If the user's finger touches the position of coordinates (54, 660), the input section 106 determines that there is an input operation in Step S110, and the input information will be output to the display control section 101.

Next, based on the input information input from the input section 106, the display control section 101 determines the touch panel information as Fig. 9 shows.

Next, in Step S112, the display control section 101 determines whether the user's operation is performed on the display region 83 of the slide bar.

Next, the display control section 101 determines the current magnification factor in Step S115. Since the current magnification factor at this time is set to "1" as Fig. 6(e), the next step determines the item list region information, the coordinates of the selected item and the data arrangement information as Figs. 6(a) to 6(c) indicate, and the Fig. 1(b) which is the same screen as Fig. 1(a) is output.

Next, the operation when the user's finger slides to the position of coordinates (107, 660) is described (Fig. 1(c)).

If the user's finger slides to the position of coordinates (107, 660), the input section 106 determines that there is an input operation in Step S110, and the input information is output to the display control section 101.

Next, based on the input information input from the input section 106, the display control section 101 determines the touch panel information as Fig. 10(e) indicates.

Next, in Step S112, the display control section 101 determines that the user's operation is an operation performed on the display region 83 of the slide bar.

Next, the display control section 101 calculates the current magnification factor as Fig. 10(d) indicates in Step S115. The current magnification factor at this time is set to "1.25" which is different from that of Fig. 6(e).

Next, in Step S107, according to the current magnification factor, the display control section 101 calculates the item list region information and the coordinates of the selected item as Figs. 10(a) and 10(b) indicate as the layout values of an item list region, and the current numbers of rows and columns of the item list are changed from four rows and three columns to five rows and two columns at this time.

Next, in Step S108, the item data layout calculating section 104 calculates the values of the data arrangement information as Fig. 10(c) indicates. At this time, since the current numbers of rows and columns are five rows and two columns, the data arrangement information is calculated from the basic data arrangement information applicable to 2 columns so that the display data 2 are displayed and output to the display 105 in addition to the display data 1.

The display control section 101 displays the display screen 200 as Fig. 1(c) shows on the display 105 in Step S109.

Next, the operation when the user's finger is separated from the control 203 of the slide bar 202 in the position of coordinates (107, 660) is described (Fig. 1(d)).

The input section 106 outputs the input information to the display control section 101 when the user's finger is separated in the position of coordinates (107, 660).

Next, based on the information input from the input section 106, the display control section 101 determines the touch panel information as Fig. 11(e) shows.

Next, in Step S112, the display control section 101 determines that the user's operation is performed on the display region of the slide bar.

Next, in Step S115, the display control section 101 determines the current magnification factor as Fig. 11(d) shows. Since the current magnification factor at this time is set to "1.25" as Fig. 10(d) shows, the next step determines the item list region information, the coordinates of the selected item and the data arrangement information as Figs. 11 (a) to 11(c) indicate, and Fig. 1(d) which is the same screen as Fig. 1(c) is output.

As stated above, according to the first embodiment of the invention, the display or non-display information of the display data, and the position and the size of the display data which are associated with the items are beforehand held as information for every number of rows and every number of columns of an item list, and the screen of the display data according to the information and the current numbers of rows and columns is output. Thereby, even if a user changes the current numbers of rows and columns of an item list to any numbers, the display control of the display data including the detailed information associated with the items can be made in an optimal form for the user.

Namely, according to the present embodiment, the display control device and the display control method can be provided so that when a user performs a scaling up or down operation on items, even if the display magnification factor of the items is not the maximum or the minimum, the display control of a plurality of display data of the items can be made in an optimal form for the user.

(Second Embodiment)

Next, a display control processing device 300 in a second embodiment of the invention is described.

In the second embodiment, the item list region 82 shown in Figs. 3(a) and 3(b) is described by assuming that a scroll operation is performed on the display region 81 of the display. In this case, a part of the plurality of items 84 may go beyond the display region 81 of the display. If a user performs an enlarging operation on the items 84 in this state and the current numbers of rows and columns of an item list are changed, the selected item 88 which the user selects is arranged out of the display region 81 of the display, and the selected item 88 may be unseen. Fig. 1(d) shows such a state and the selected item 206 has gone beyond the display screen 200. In view of this phenomenon, a processing block, which can change the current numbers of rows and columns of an item list so that the selected item 206 will not be unseen even if a user performs an enlarging operation on the items 201, is added to the display control processing device 100 described in the first embodiment.

Fig. 12 is a block diagram which shows the structure of a display control processing device 300 in the second embodiment of the invention. The display control processing device 300 differs from the display control processing device 100 described in the first embodiment in that a movement amount calculating section 107 is added.

The display control section 301 of the display control processing device 300 not only performs the same processes as the display control section 101 of the first embodiment, but also determines a display position determination form and an enlargement instruction content which are described later based on the information input by the input section 106. The display control section 301 performs a screen display on the display 105 based on the data arrangement information which are calculated by the item data layout calculating section 104, the display data information stored in the hard disk 102, and movement amounts X and Y which are calculated by the movement amount calculating section 107 and which are described later.

According to the display position determination form which the display control section 301 determines, the movement amount calculating section 107 calculates the movement amounts X and Y so that the selected item 88 may be included in a predetermined position, for example, within the display region 81 of the display.

Hereafter, the detailed structure of the display control processing device 300 and screen display operations in the second embodiment of the invention are described. Figs. 13(a) to 13(d) are diagrams which show screen display operations of the display control processing device 300 in the second embodiment of the invention.

In the description of this screen display operation, as a precondition of the display control processing device 300 in the second embodiment, the values in the memory area which is acquired in Step S102 of Fig. 8 correspond to the values recorded in Figs. 4(a) to 4(c) and Figs. 6(a) to 6(g), namely, Fig. 13(a) which becomes the same screen as Fig. 1(a) shall be output on the display 105. These values are an example only, and the present invention is not limited to these values.

As an enlarging operation which a user performs on the items 201, it is assumed that the finger is moved from coordinates (54, 660) to coordinates (107, 660) on the slide bar 202 (Figs. 13(b), 13(c) and 13(d)).

Figs. 14(a) to 14(c) are diagrams for describing the information which the display control section 301 or the movement amount calculating section 107 of the display control processing device 300 in the second embodiment of the invention calculates. In Fig. 14(a), the movement amount X and the movement amount Y indicate movement amounts of the item list region 82 with the upper left of the display region 81 of the display as the origin, and the display control section 301 makes a screen output to the display 105 by moving the item list region 82 for the movement amount X calculated by the movement amount calculating section 107 in the direction of X, and for the movement amount Y in the direction of Y. In Fig. 14(a), it is shown that the movement amount in the direction of X is "0 dots" to the right, and the movement amount in the direction of Y is "0 dots". Images when the display control section 301 makes screen outputs of the item list region 82 to the display 105 according to the movement amounts X and Y are shown in Figs. 15(a) to 15 (c). In Figs. 15(a) to 15(c), a movement amount X161 and a movement amount Y162 are conceptually expressed, and the relation between the movement of the item list region 82 and the display screen 200 on the display 105 when the movement amount X is "40 dots" and the movement amount Y is "-288 dot" is shown.

Returning back to Fig. 14(b), the display position determination form indicates a form for the purpose of determining a position on the display region 81 of the display at which the item list region 82 is displayed, and there are "centering" and "centering termination" as values which can be set.

First, the "centering" indicates that the display position of the item list region 82 is determined so that the selected item 88 in the item list region 82 is screen-displayed at a centered position in the display region 81 of the display in the direction ofY, and so that the item list region 82 may be displayed by being centered horizontally relative to the display region 81 of the display. More specifically, as shown in Figs. 16(a) to 16(c), the movement amount calculating section 107 calculates the movement amount X161 and the movement amount Y162 so that the selected item 88 is screen-output by being centered in the display region 81 of the display.

On the other hand, the "centering termination" indicates that the display position of the item list region is determined so that when the upper edge of the item list region 82 is below the upper edge of the display region 81 of the display although the same process as the "centering" mentioned above is performed, the screen is displayed at a position where the upper edge of the item list region 82 is at the same position as the upper edge of the display region 81 of the display. Further, the "centering termination" indicates that the display position of the item list region 82 is determined so that when the current item list region size (height) is larger than the display region size (height) of the display and the lower edge of the item list region 82 is above the lower edge of the display region 81 of the display, the screen is displayed at a position where the lower edge of the item list region 82 is at the same position as the lower edge of the display region 81 of the display. More specifically, as Figs. 17(a) to 17(f) show, the movement amount calculating section 107 calculates the movement amount X and the movement amount Y.

The enlargement instruction content shown in Fig. 14(c) indicates an instruction content at the time of enlarging the items 84, and there are "enlargement instruction" and "enlargement termination instruction" as values which can be set here. It is shown that the enlargement instruction content in Fig. 14(c) is "enlargement termination instruction."

Next, operations of the display control processing device 300 are described.

Fig. 18 is a flow chart which shows processes which the display control processing device 300 in the second embodiment performs at the time of the screen display operations. As compared with the flow chart of the first embodiment shown in Fig. 8, Step S117, Step S118 and Step S119 are added. Since the processes of Step S102, Step S103, Step S109 and Step S116 are changed, new Step S1102, Step S1103, Step S1109 and Step S1116 are shown in Fig. 18.

First, Step S117, Step S118 and Step S119 which are added in the second embodiment are described.

When the state of a finger of the touch panel information input from the input section 106 is "press" or "slide", the display control section 301 writes the enlargement instruction content as "enlargement instruction" into the memory area which is acquired in Step S1102, and when the state of a finger is "release", the display control section 301 writes the enlargement instruction content as "enlargement termination instruction" into the memory area which is acquired in Step S 1102 (Step S117).

When the enlargement instruction content determined in Step S117 is "enlargement instruction", the display control section 301 writes the display position determination form as "centering"' into the memory area which is acquired in Step S1102, and when the enlargement instruction content is "enlargement termination instruction", the display control section 301 writes the display position determination form as "centering termination" into the memory area which is acquired in Step S1102 (Step S118).

Based on the display region size ((width) and (height)) in the basic display information on an item list that is written in the memory 103 in Step S1103, the item list region information written in the memory 103 in Step S107, the movement amount X and the movement amount Y which are written in the memory 103 in Step S205 which is described later, and the display position determination form written in the memory in Step S 118, the movement amount calculating section 107 calculates the movement amounts X and Y as follows (Step S119).

Fig. 19 is a flow chart which shows subroutine processes which describe movement amount calculating processes which the movement amount calculating section 107 performs in Step S119 of Fig. 18.

With reference to Fig. 19, the movement amount calculating section 107 determines whether the display position determination form is "centering" or "centering termination" (Step S201). In this determination, when the display position determination form is "centering" or "centering termination", the movement amount Y is calculated using the following formula so that the center of the selected item 88 may come to the center of the display region 81 of the display (Step S202).

Movement amount Y = {(display region size (height) - the current item size (height)) / 2} - coordinate Y of the selected item

Next, the movement amount calculating section 107 determines whether the display position determination form is "centering termination" (Step S203). In this determination, when the display position determination form is "centering termination", it is determined whether the upper edge of the item list region 82 is below the upper edge of the display region 81 of the display (Step S204). In the determination of Step S204, if the movement amount Y calculated in Step S202 is larger than "0", it can be determined that the upper edge of the item list region 82 is below the upper edge of the display region 81 of the display.

When it is determined in the determination of this Step S204 that the upper edge of the item list region 82 is below the upper edge of the display region 81 of the display, the movement amount Y is determined using the following formula, so that the upper edge of the item list region 82 may become at the same position as the upper edge of the display region 81 of the display (Step S205).

$$\text{Movement amount } Y = 0$$

Next, the movement amount calculating section 107 calculates the movement amount X using the following formula so that the item list region 82 may be displayed by being centered horizontally relative to the display region 81 of the display (Step S206).

$$\text{Movement amount } X = (\text{display region size (width)} - \text{current item list region size (width)}) / 2$$

Next, if the movement amount X and the movement amount Y calculated in Step S205, Step S206 or Step S209 described later are changed from the values in the memory area which is acquired in Step S1102, the movement amount calculating section 107 overwrites the values in the memory area which is acquired in Step S1102 with the calculated result (Step S207).

On the other hand, when it is determined in Step S204 that the upper edge of the item list region 82 is not below the upper edge of the display region 81 of the display, it is determined whether the current item list region size (height) is larger than the display region size (height) of the display, and the lower edge of the item list region is above the lower edge of the display region of the display (Step S208). In this determination, if the current item list region size (height) is larger than the display region size (height) of the display, and the value of the display region size (height) of the display is larger than the value of (the current item list region size (height) + the movement amount Y calculated in Step S202), it is determined that the current item list region size (height) is larger than the display region size (height) of the display, and the lower edge of the item list region 82 is above the lower edge of the display region 81 of the display.

when it is determined in this step S208 that the current item list region size (height) is larger than the display size (height), and the lower edge of the item list region is above the lower edge of the display region of the display, the movement amount calculating section 107 calculates the movement amount Y which makes the lower edge of the item list region 82 becomes at the same position as the lower edge of the display region 81 of the display using the following formula (Step S209).

Movement amount Y = display region size (height) - current item list region size (height)

Next, Step S1102, Step S1103, Step S1109, and Step S1116 in which the processes are changed from the first embodiment are described.

In Step S1102 in Fig. 18, the display control section 301 not only performs the same process as Step S102 described in the first embodiment, but also acquires a memory area for storing the movement amounts, the display position determination form and the enlargement instruction content.

In Step S1103, the display control section 301 not only performs the same process as Step S103 in the first embodiment, but also initializes both the movement amount X and movement amount Y as "0", the display position determination form as "centering termination", and the enlargement instruction content as "enlargement termination", and writes each of these values into the memory area which is acquired in Step S102.

In Step S1109, the display control section 301 screen-displays the display data in the display data information written in the memory in Step S1103 on the display 105 in the size shown in the data arrangement information in a position where the movement amount X and the movement amount Y written in the memory in Step S119, are respectively added to the X coordinate and Y coordinate of the display data shown in the data arrangement information written in the memory 103 in Step S108.

In Step S1116, the display control section 301 obtains the item which the user selects based on the X coordinate and the Y coordinate in the touch panel information, the current item size and the current numbers of rows and columns in the item list region information, the number of items in the basic display information on an item list, and the movement amount X and the movement amount Y, and writes the item as the selected item 88 into the memory area which is acquired in Step S1102.

As a fundamental screen display operation of the display control processing device 300 in the second embodiment, when the display screen 200 shown in Fig. 13(a) is displayed in an initial state and a user's finger touches the position of coordinates (54, 660), the display control section 301 determines the enlargement instruction content as "enlargement instruction" in Step S117. Next, in Step S118, since the enlargement instruction content is "enlargement instruction", the display control section 101 determines the display position determination form as "centering." Thereby, since the display position determination form is "centering", in the subroutine Step S202 in Step S119, the movement amount calculating section 107 calculates the movement amount Y so that the center of the selected item 88 may come to the center of the display region 81 of the display. Next, in Step S206, the movement amount calculating section 107 calculates the movement amount X so that the item list region 82 may be displayed by being centered horizontally relative to the display region 81 of the display. Next, in Step S207, the movement amount X and the movement amount Y are written in the memory 103.

In Step S1109, the display control section 301 screen-displays the display data in the display data information on the display 105 in the size shown in the data arrangement information in a position where the movement amount X and the movement amount Y written into the memory 103 in Step S1109, are respectively added to the X coordinate and Y coordinate of the display data shown in the data arrangement information. An example of the display screen 200 in this case is shown in Fig. 13(b).

Then, the operation when the user's finger slides to the position of coordinates (107, 660) is described (Fig. 13(c)). If the user's finger slides to the position of coordinates (107, 660), the display control section 301 determines the enlargement instruction content as "enlargement instruction" in Step S117. Next, in Step S118, since the enlargement instruction content is "enlargement instruction", the display control section 301 determines the display position determination form as "centering." An example of the display screen 200 in this case is shown in Fig. 13(c).

Then, the case that the user's finger is separated in the position of coordinates (107, 660) is described (Fig. 13(d)). If the user's finger is separated, the display control section 301 determines the enlargement instruction content as "enlargement termination instruction" in Step S117. Next, the display control section 301 determines the display position determination form as "centering termination" in Step S118. Thereby, since the display position determination form becomes "centering termination", the movement amount calculating section 107 calculates the movement amount Y in Step S202 so that the center of the selected item 88 may come to the center of the display region 81 of the display.

In Step S208, the movement amount calculating section 107 determines that the current item list size (height) is larger than the display region size (height) of the display, and the lower edge of the item list region 82 is above the lower edge of the display region 81 of the display, and in Step S209, the movement amount calculating section 107 recalculates the movement amount Y so that the lower edge of the item list region 82 may become at the same position as the lower edge of the display region 81 of the display.

Next, in Step S206, the movement amount calculating section 107 calculates the movement amount X so that the item list region 82 may be displayed by being centered horizontally relative to the display region 81 of the display. In Step S207, the movement amount X and the movement amount Y are written in the memory 103.

Further, the display control section 301 screen-displays the display data in the display data information written into the memory 103 in Step S103 on the display 105 in the size shown in the data arrangement information in a position where the movement amount X and the movement amount Y written in the memory 103 in Step S119 are respectively added to the X coordinate and Y coordinate of the display data which are shown in the data arrangement information written in the memory 103 in Step S119 and Step S108. An example of the display screen in this case is shown in Fig. 13(d).

Thus, according to this embodiment, even when a user is performing a scaling up or down operation on items and changing the number of rows and the number of columns, the display control processing device can keep the selected item at a specified position on the display (for example, the center on the display) and screen-output. Therefore, the user can perform a scaling up or down operation, without making the selected item unseen.

(Third Embodiment)

Next, a display control processing device 400 in a second embodiment of the invention is described.

In the display control processing device 400, in addition to the description of the second embodiment, it is assumed that the current magnification factor calculated in Step S115 based on an enlarging operation which a user performs on the items 84 is between the magnification factor for n columns and the magnification factor for (n+1) columns when the number of columns of an item list is n, where n is a natural number which is equal to or larger than one.

In this case, unfilled spaces are produced between the item list region 82 and the display region 81 of the display, and waste occurs in the information area on the display region 81 of the display. Fig. 13(d) shows this state and waste occurs in the regions of the right and left dotted-line portions of the item list region 82 on the display screen 200. For this reason, when a user terminates an enlarging operation and the specified magnification factor is between the magnification factor for n columns and the magnification factor for (n+1) columns, the specified magnification factor is corrected to the magnification factor for n or (n+1) columns, and the item list can be screen-output in n or (n+1) columns.

Fig. 20 is a block diagram which shows the structure of the display control processing device 400 in the third embodiment of the invention. The display control processing device 400 differs from the display control processing device 300 shown in Fig. 12 in that a corrected magnification factor calculating section 108 is added.

The display control section 401 not only performs the same processes as the display control section 301 described in the second embodiment, but also corrects the magnification factor by controlling the corrected magnification factor calculating section 108 when it is determined that the user terminates the enlarging operation based on the input to the input section 106. The display control section 401 performs a screen display on the display 105 according to the magnification factor corrected by the corrected magnification factor calculating section 108.

The corrected magnification factor calculating section 108 corrects the magnification factor to the magnification factor for n or (n+1) columns when the magnification factor is between the magnification factor for n columns and the magnification factor for (n+1) columns.

Next, the detailed structure of the display control processing device 400 and screen display operations in the third embodiment of the invention are described.

Fig. 21 is a flow chart which shows processes which the display control processing device 400 in the third embodiment performs at the time of the screen display operations. The flow chart in Fig. 21 differs from the flow chart of the second embodiment shown in Fig. 19 in that Step S120 and Step S121 are added.

Next, the added Step S120 and Step S121 are described.

The display control section 401 transfers processes to the corrected magnification factor calculating section 108 when the enlargement instruction content determined in Step S117 is "enlargement termination instruction" (Step S120).

The corrected magnification factor calculating section 108 corrects the magnification factor written into the memory 103 in Step S115 based on the display region size (width) of the display which is written into the memory 103 in Step S103 and the default item size (width) written into the memory 103 in Step S104 (Step S121).

In Step S121, the corrected magnification factor calculating section 108 first calculates the number of columns at the time of displaying the item list region 82 according to the magnification factor written into the memory 103 using the following formula.

$$\text{Number of columns} = \text{display region size (width) of the display} / (\text{default item size (width)} \times \text{current magnification factor})$$

The corrected magnification factor calculating section 108 determines a value of the above-mentioned calculated result at this time in which those numbers after the decimal point are cut down as the corrected number of columns. The corrected magnification factor calculating section 108 obtains the corrected magnification factor corresponding to the corrected number of columns using the following formula.

$$\text{Corrected magnification factor} = \text{display region size (width) of the display} / \text{default item size (width)} / \text{corrected number of columns}$$

The corrected magnification factor calculated in this way is written into the memory area which is acquired in Step S102 as the current magnification factor.

Figs. 22(a) and 22(b) are diagrams which show the example of screen display operations of the display control processing device 400 in the third embodiment of the invention.

In the description of this screen display operation, as a precondition of the display control processing device 400 in the third embodiment, it is assumed that a user separates a finger from the control 203 from Fig. 22(a) which is a screen state equivalent to Fig. 13(c) described in the second embodiment. When the user separates the finger from the control 203, in Step S117, the display control section 401 determines the enlargement instruction content as "enlargement termination instruction", and in Step S120, the display control section 401 transfers processes to the corrected magnification factor calculating section 108, since the enlargement instruction content is "enlargement termination instruction".

In Step S115, the magnification factor in this state is obtained to be "1.25", and in Step S121, the corrected magnification factor calculating section 108 calculates that the number of columns when this magnification factor is "1.25" is "2.4", and the display control section 401 sets the corrected number of columns to be "two", and the corrected magnification factor according to this number of columns to be "1.5", makes this to be the current magnification factor, and screen-displays the display screen 200 shown in Fig. 22(b) on the display 105.

Thus, according to the third embodiment, in a series of scaling up or down operations by shifting the control 203 of the slide bar 202 rightward or leftward, the layout of the display data of the item list region 82 is changed with the change of the current numbers of rows and columns of the item list region 82, the selected item is displayed by being centered relative to the display region 81 of the display during the enlarging operation, and the item list can be displayed without waste in the information area while the finger is separated.

Namely, according to this embodiment, a display control processing device and a display control method can be provided so that even if the current magnification factor is between the magnification factor when the number of columns of the item list is n (where n is a natural number which is equal to or larger than one) and the magnification factor when the number of columns of the item list is (n+1) since the user performs a scaling up or down operation on the items, unfilled spaces will not be produced between the item list region and the display region of the display, and waste in the information area on the display region of the display may not be easily produced.

Although the present embodiment is described by assuming that the current magnification factor is between the magnification factor when the number of columns of the items is n and the magnification factor when the number of columns of the items is (n+1), the present invention is not limited to this example. For example, when the current magnification factor is between the magnification factor when the number of rows of the items is n and the magnification factor when the number of rows of the items is (n+1), it is also possible that the corrected magnification factor calculating section 108 corrects the current magnification factor to the magnification factor for n rows or (n+1) rows.

As stated above, according to the invention, the display or non-display information of the display data, and the position and the size of the display data which are associated with the items are beforehand held as information for every number of rows and every number of columns of an item list, and it is possible to screen-output according to the information and the current numbers of rows and columns. Thus, even if a user changes the current numbers of rows and columns of an item list to any numbers, the detailed information associated with the items (display data) can be displayed and controlled in an optimal form for the user.

For example, a series of screen displays as Figs. 23(a) to 23(e) show can be performed. When the current numbers of rows and columns are large, since the items 84 are listed and displayed in a bird's view so that the selected item 88 and its neighborhood can be easily found, the display data of the items 84 are only thumbnail information. By performing an enlargement display when the aimed selected item 88 or the neighboring items 84 are found, and by increasing the display of the detailed information associated with the items 84 and screen outputting as the user decreases the current numbers of rows and columns, the target item can be easily found.

When the user changes the current numbers of rows and columns, since the display position of the selected item 88 is changed on the display 105, the user may miss the selected item 88 in the changing process. However, according to the present invention, even if the user is performing an enlarging operation on the items and changing the current numbers of rows and columns, since a screen output can be made while the selected item 88 is held at a specified position on the display 105 (for example, center on the display 105), the enlargement display can be made while the user does not miss the selected item 88.

In an information terminal which adjusts the magnification factor of the items 84 finely using the slide bar 202, and can change the current numbers of rows and columns in an item list with the magnification factor, since the width of the item list region 82 becomes smaller relative to the display 105 when the magnification factor specified by the user is between the magnification factor for n columns and the magnification factor for (n+1) columns like Fig. 13(d), waste in the information area may be produced. However, according to the present invention, when the user's enlarging operation is terminated, since the item list is displayed like Fig. 22(b) by correcting the magnification factor so that there is no waste in the information area, it is possible to use the information area without waste, and the invention is more useful in a terminal whose display size is small like a portable terminal.

Although it is described in the embodiments of the present invention that the display control processing devices have the functional blocks shown in Figs. 2, 12 and 20, the present invention is not limited to these examples. The same functions can be realized by performing a display control processing program which records the processing steps shown in Figs. 8, 18, 19 and 21 by using a computer which has the hard disk 102 and the memory 103.

The basic display information on an item list, the basic layout information on items, and the display data information described in the embodiments can be arbitrarily changed based on the screen size of the display 105, the screen specification of an item list, or the like.

Although the display position, the size and the display or non-display information of the display data associated with the items can be controlled in the embodiments, the present invention is not limited to these examples. If this process is applied, other display-related attributes such as color of a character string or font type are also defined for every number of rows or every number of columns of an item list region, and screens are output accordingly. In this way, it is possible to customize and display the item list in various display styles for every display number of rows or every number of columns in the item list.

Although the magnification factor is changed using the slide bar 202 in the embodiments, the present invention is not limited to this example. Other means which can change the magnification factor may be used as the input section 106.

Although the embodiments are described using some expressions and valuations, the present invention is not limited to these examples. As long as the same values and effects may be obtained, it is possible to use other formulas to process.

In the embodiments, the process which the item data layout calculating section 104 performs in Step S108 may be a process in which the arrangement position and the size of the display data associated with the items are specifically decided according to the current magnification factor. In the embodiments, as an example, the arrangement position and the size of the display data are determined based on the basic layout information on items in which values are set on the basis of the case that the current item size (width) is "1", and the actual current item size (width) determined in accordance with the current magnification factor.

Although in the first embodiment and the second embodiment, the display control sections 101 and 301 determine and process the current numbers of rows and columns of the item list based on the magnification factor of the items, it is also possible to add a process with which the user can input the current numbers of rows and columns to the display control processing device so that the display control process can be performed by using the current numbers of rows and columns which are input. Although the item data layout calculating section 104 calculates the arrangement position and the size of the display data associated with the items based on the magnification factor which the display control section 101 calculates and the basic layout information on items, when not "ratio" but "dot" relative to the display region of the display is used in the basic layout information, even if the display control section 101 does not control the magnification factor, the item data layout calculating section 104 can calculates the arrangement position and the size of the display data associated with the items only based on the number of rows, the number of columns, and the basic data arrangement in the basic layout information on items.

In the second embodiment and the third embodiment, the process of Step S119 is applied, and the display determination form is not only limited to "centering" and "centering termination". A determination form (common top) in which the upper edge of the selected item sticks to the upper edge of the display region of the display, a determination form (common bottom) in which the lower edge of the selected item sticks to the lower edge of the display region of the display, or a determination form (specified position of the display region of the display) in which the selected item sticks to a specified position of the display region of the display may be added in the display specification of screens.

In the third embodiment, in Step S118, a processing control, which moves the position of the control of the slide bar 202 to the position applicable to the corrected magnification factor when the current magnification factor is corrected, may be added.

In the third embodiment, in the rounding when the corrected number of columns is calculated in Step S121, not only rounding-down but also rounding-up can be used. When the rounding-down is used, if the magnification factor is between the magnification factor for n (where n is a natural number which is equal to or larger than one) columns and the magnification factor for (n+1) columns, the corrected magnification factor is the magnification factor for n columns. When the rounding-up is used, if the magnification factor is between the magnification factor for n columns and the magnification factor for (n+1) columns, the corrected magnification factor is the magnification factor for (n+1) columns. In the rounding when the number of columns is calculated, when it is determined that a user operates to increase the magnification factor, the rounding-down may be used, and when it is determined that the user operates to decrease the magnification factor, the rounding-up may be used.

As a determination in this time, the touch panel coordinates at the time of the enlargement instruction which the display control section 101 wrote into the memory in Step S111 are separately stored each time by the corrected magnification factor calculating section 108 in a memory area used only by the corrected magnification factor calculating section 108. By comparing the touch panel coordinates which the display control section 101 wrote into the memory in Step 5111 with the stored previous touch panel coordinates at the time of the enlargement instruction which the display control section 101 wrote into the memory in Step S111, the moving direction of a finger can be specified, and it can be determined whether the user performs an operation of increasing the magnification factor or whether the user performs an operation of decreasing the magnification factor.

However, in the touch panel device, even if the user intends to keep the finger still on the touch panel, with the shaking of a finger or the like, the X coordinate or Y coordinate of the touch panel information may change delicately and may be transmitted from the input section 106. It may be determined whether the user "intentionally" performs an operation of increasing the magnification factor or whether the user "intentionally" performs an operation of decreasing the magnification factor. As determination conditions of "intentionally", whether the finger continuously moves in the same direction for a certain distance is mentioned as an example. Of course, if there are other methods for judging whether an "intentional" operation of increasing the magnification factor is performed, processes also can be performed so that the determination may be followed.

The invention is intended to cover various alterations and applications made by those who are skilled in the art on the basis of the description of the specification and well-known technology without departing from the spirit and scope of the present invention, and these alterations and applications shall fall within a range where protection of the invention is sought. Without departing from the spirit of the invention, the component elements in the above embodiments may be combined arbitrarily.

The present application is based on the Japanese patent application (patent application No. 2010-072032) filed on March 26, 2010, the contents of which are incorporated herein by reference.

## Industrial Applicability

As stated above, according to the present invention, the display control processing device, the display control processing method and the display control processing program can be provided so that when a user performs a scaling up or down operation on items, even if the display magnification factor of the items is not the maximum or the minimum, a plurality of display data of the items can be displayed and controlled in an optimal form for the user.

Therefore, the present invention is useful in the display of detailed information of dates and file names related to images in an item list display of photographs, the display of book names, author names, or part of articles related to books in a book search in a library, the display of detailed information of patient names and symptoms relevant to X-ray photography in a medical field, or the like.

## Reference Signs List

| | |
|---|---|
| 81: | display region of display |
| 82: | item list region |
| 83: | display region of slide bar |
| 84, 201: | item |
| 85, 202: | slide bar |
| 86, 203: | control |
| 200: | display screen |
| 88, 206: | selected item |
| 100, 300, 400: | display control processing device |
| 101, 301, 401: | display control section |
| 102: | hard disk |
| 103: | memory |
| 104: | item data layout calculating section |
| 105: | display |
| 106: | input section |
| 107: | movement amount calculating section |
| 108: | corrected magnification factor calculating section |
| 161: | movement amount X |
| 162: | movement amount Y |
| 200: | display screen |
| 204: | thumbnail view |
| 205: | text view |

## Claims

1. A display control processing device for displaying a plurality of items containing a plurality of display data in a matrix format, the device comprising:

   a storage section which is adapted to store basic layout information on items containing display or non-display information, display position, and size of each of the display data for every number of rows or every number of columns;
   an input section which is adapted to receive an input at least on scaling up or down of the items;
   a display control section which is adapted to determine the number of rows and the number of columns for the plurality of items to be displayed, based on an input to the input section;

an item data layout calculating section which is adapted to calculate data arrangement information containing the display or non-display information, the display position, and the size of each of the display data for each of the items based on the number of rows and the number of columns determined by the display control section and the basic layout information on items; and

a display section which is adapted to display the plurality of items, wherein

the display control section causes the plurality of items to be displayed on the display section based on the data arrangement information changed by the item data layout calculating section in accordance with change of the number of rows and the number of columns.

**2.** The display control processing device according to claim 1, wherein
the item data layout calculating section calculates the data arrangement information in which the number of the display data to be displayed for each of the items is changed in accordance with the change of the number of rows and the number of columns calculated by the display control section.

**3.** The display control processing device according to claim 1 or claim 2, wherein
the input section receives an input by which a desired item is selected from the plurality of items,
the display control section determines a selected item which is selected among the plurality of items by the input to the input section,
the display control processing device includes a movement amount calculating section which is adapted to calculate movement amounts for which the plurality of items are moved so that the selected item is arranged at a predetermined position of the display section, and
the display control section causes the plurality of items to be displayed based on the data arrangement information and the movement amounts which are calculated by the movement amount calculating section so that the selected item is arranged at the predetermined position of the display section.

**4.** The display control processing device according to any one of claims 1 to 3, wherein
the display control section calculates a magnification factor of the items based on an input to the input section, and determines the number of rows and the number of columns for the plurality of items to be displayed, based on the magnification factor, and
the display control processing device includes a corrected magnification factor calculating section which is adapted to correct the magnification factor calculated by the display control section to a magnification factor for n or (n+1) rows or columns when the magnification factor calculated by the display control section is between the magnification factor when the number of rows or columns of the items is n and the magnification factor when the number of rows or columns of the items is (n+1), where n indicates a natural number which is equal to or larger than one.

**5.** A display control processing method for displaying a plurality of items containing a plurality of display data in a matrix format by using a display control processing device which includes a storage section that is adapted to store basic layout information on items containing display or non-display information, display position, and size of each of the display data for every number of rows or every number of columns, the method comprising:

an input step of receiving an input at least on scaling up or down of the items;

a display control step of determining the number of rows and the number of columns for the plurality of items to be displayed, based on an input in the input step;

an item data layout calculating step of calculating data arrangement information containing the display or non-display information, the display position, and the size of each of the display data for each of the items based on the number of rows and the number of columns determined by the display control step and the basic layout information on the items; and

a display step for displaying the plurality of items based on the data arrangement information changed by the item data layout calculating section in accordance with change of the number of rows and the number of columns.

**6.** A display control processing program for displaying a plurality of items containing a plurality of display data in a matrix format by using a computer which includes a storage section which is adapted to store basic layout information on items containing display or non-display information, display position, and size of each of the display data for every number of rows or every number of columns, the program causing the computer to perform the following steps:

an input step of receiving an input at least on scaling up or down of the items;

a display control step of determining the number of rows and the number of columns for the plurality of items to be displayed, based on an input in the input step;

an item data layout calculating step of calculating data arrangement information containing the display or non-display information, the display position, and the size of each of the display data for each of the items based on the number of rows and the number of columns determined by the display control step and the basic layout information on the items; and

a display step of displaying the plurality of items based on the data arrangement information changed by the item data layout calculating section in accordance with change of the number of rows and the number of columns.

FIG. 1

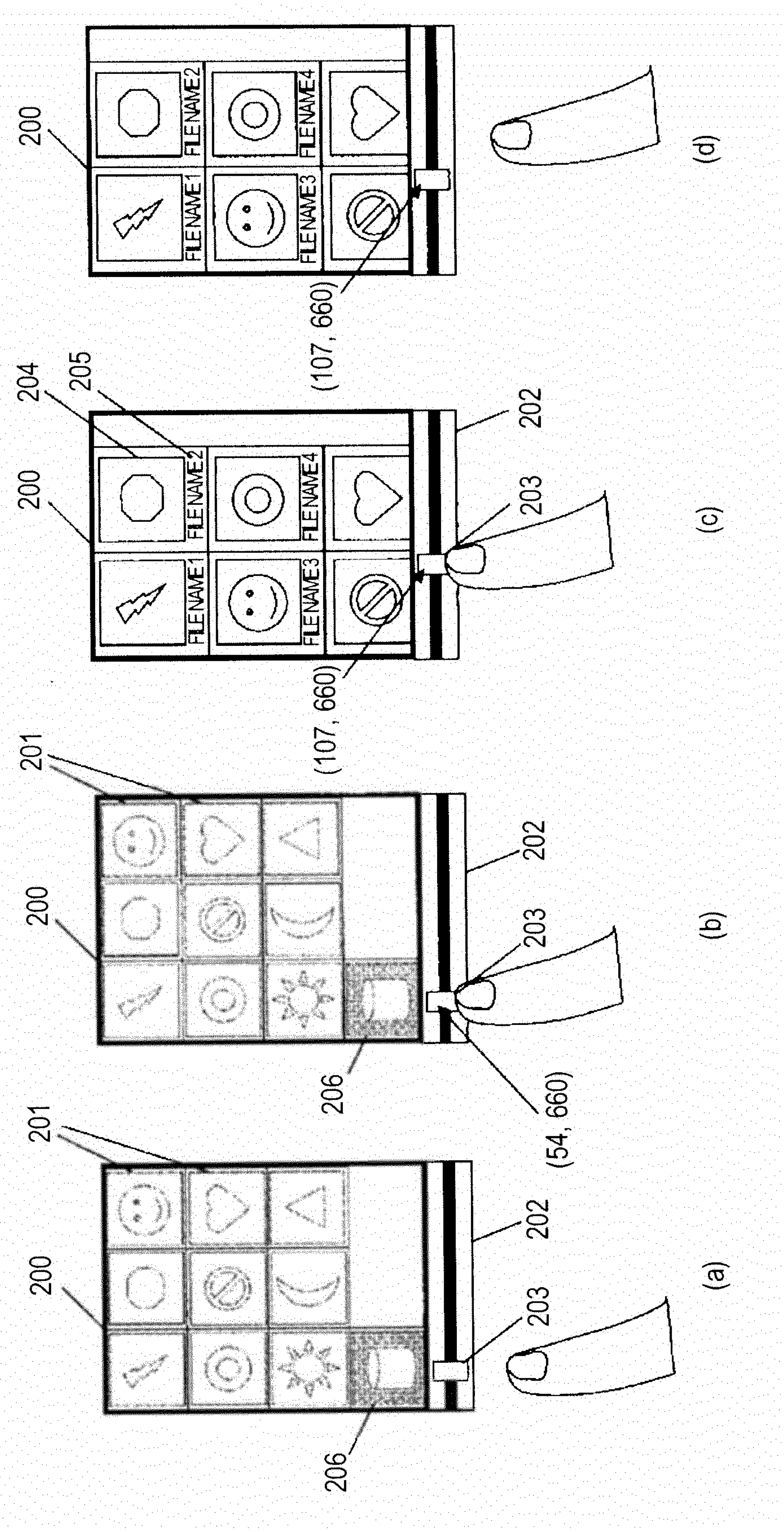
200
201
202
203
206
(a)
200
201
202
203
206
(54, 660)
(b)
200
204
205
202
203
FILE NAME1
FILE NAME2
FILE NAME3
FILE NAME4
(107, 660)
(c)
200
FILE NAME1
FILE NAME2
FILE NAME3
FILE NAME4
(107, 660)
(d)

FIG. 2

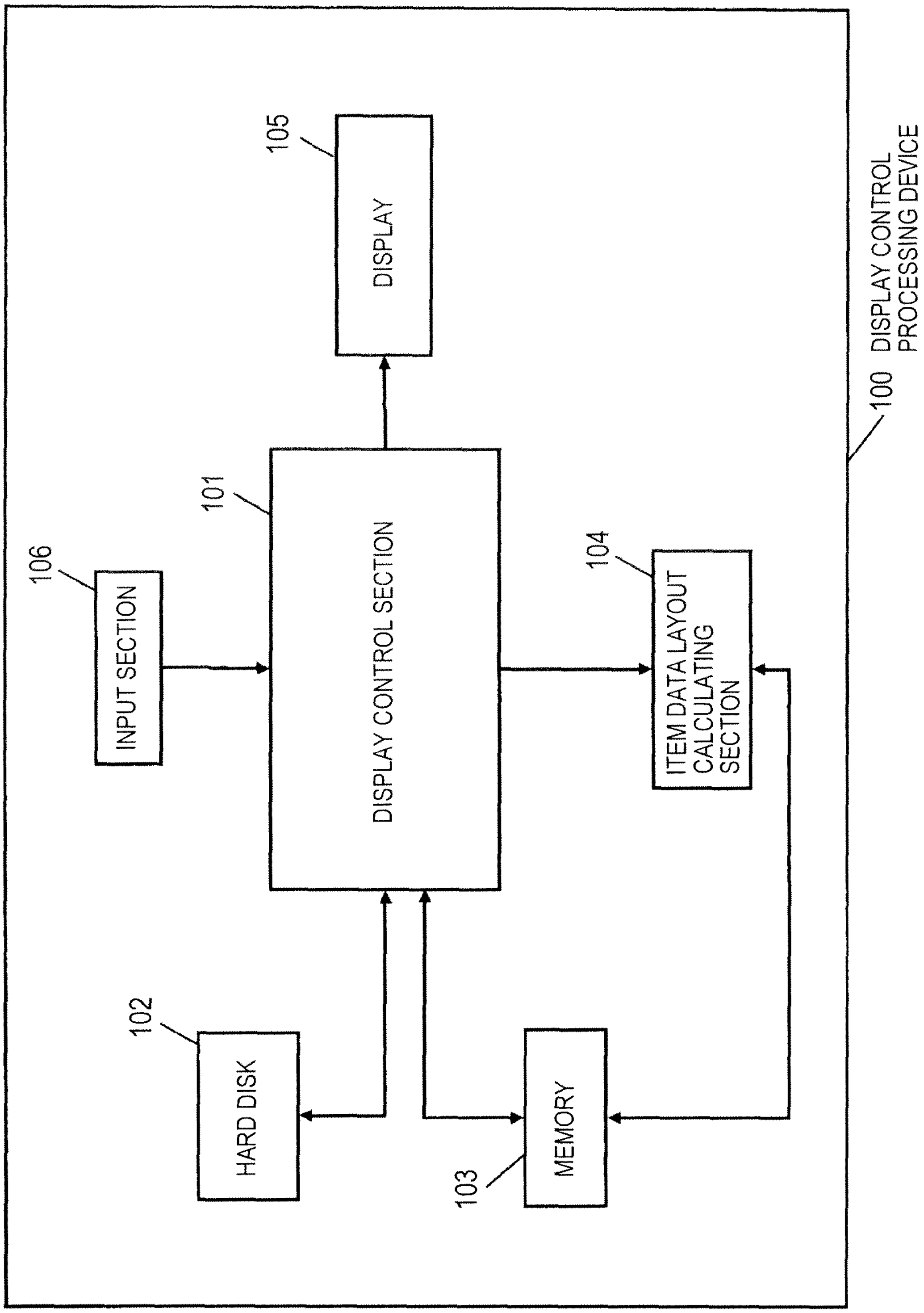
100 DISPLAY CONTROL PROCESSING DEVICE
105
DISPLAY
101
DISPLAY CONTROL SECTION
106
INPUT SECTION
104
ITEM DATA LAYOUT CALCULATING SECTION
102
HARD DISK
103
MEMORY

FIG. 3

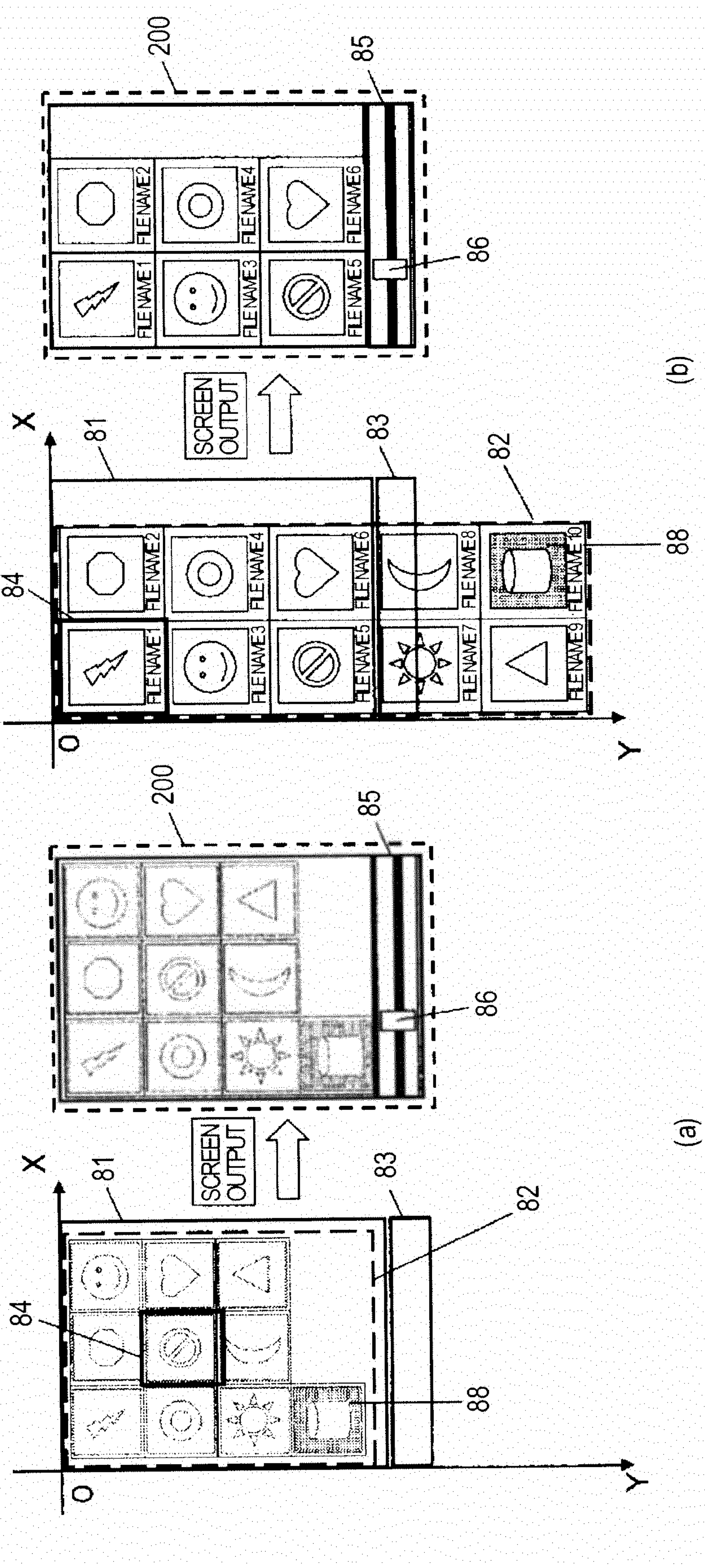
SCREEN OUTPUT
FILE NAME 1
FILE NAME 2
FILE NAME 3
FILE NAME 4
FILE NAME 5
FILE NAME 6
FILE NAME 7
FILE NAME 8
FILE NAME 9
FILE NAME 10
X
Y
O
81
82
83
84
85
86
88
200
(a)
(b)

*FIG. 4*

(a) BASIC DISPLAY INFORMATION ON ITEM LIST

| DISPLAY REGION SIZE OF DISPLAY | | DISPLAY REGION INFORMATION OF SLIDE BAR | | | | DEFAULT NUMBER OF DISPLAY COLUMNS | MAXIMUM NUMBER OF DISPLAYABLE COLUMNS | ITEM NUMBER |
|---|---|---|---|---|---|---|---|---|
| WIDTH | HEIGHT | X | Y | WIDTH | HEIGHT | | | |
| 480 | 654 | 0 | 654 | 480 | 100 | 3 | 4 | 10 |

(b) BASIC LAYOUT INFORMATION ON ITEMS

| NUMBER OF COLUMNS | RATIO TO THE CURRENT ITEM SIZE (HEIGHT) | BASIC DATA ARRANGEMENT INFORMATION | | | | | | | | | | | |
|---|---|---|---|---|---|---|---|---|---|---|---|---|---|
| | | DISPLAY DATA 1 | | | | DISPLAY DATA 2 | | | | DISPLAY DATA 3 | | | |
| | | X | Y | WIDTH | HEIGHT | X | Y | WIDTH | HEIGHT | X | Y | WIDTH | HEIGHT |
| 1 | 1.3 | 0.1 | 0.1 | 0.4 | 0.4 | 0.5 | 0.1 | 0.5 | 0.5 | 0 | 0.5 | 1 | 0.5 |
| 2 | 1.2 | 0.1 | 0.1 | 0.8 | 0.8 | 0.1 | 1 | 0.8 | 0.1 | – | – | – | – |
| 3 | 1 | 0.1 | 0.1 | 0.8 | 0.8 | – | – | – | – | – | – | – | – |
| 4 | 1 | 0 | 0 | 1 | 1 | – | – | – | – | – | – | – | – |

(RATIO TO THE CURRENT ITEM SIZE (WIDTH))

(c) DISPLAY DATA INFORMATION

| ITEM NUMBER | DISPLAY DATA 1 | | DISPLAY DATA 2 | | DISPLAY DATA 3 | |
|---|---|---|---|---|---|---|
| | TYPE | CONTENT | TYPE | CONTENT | TYPE | CONTENT |
| 1 | BMP | BMP 1 BODY | TEXT | FILE NAME 1 | TEXT | DETAILED INFORMATION 1 |
| ... | ... | ... | ... | ... | ... | ... |
| 10 | BMP | BMP 10 BODY | TEXT | FILE NAME 10 | TEXT | DETAILED INFORMATION 10 |

FIG. 5

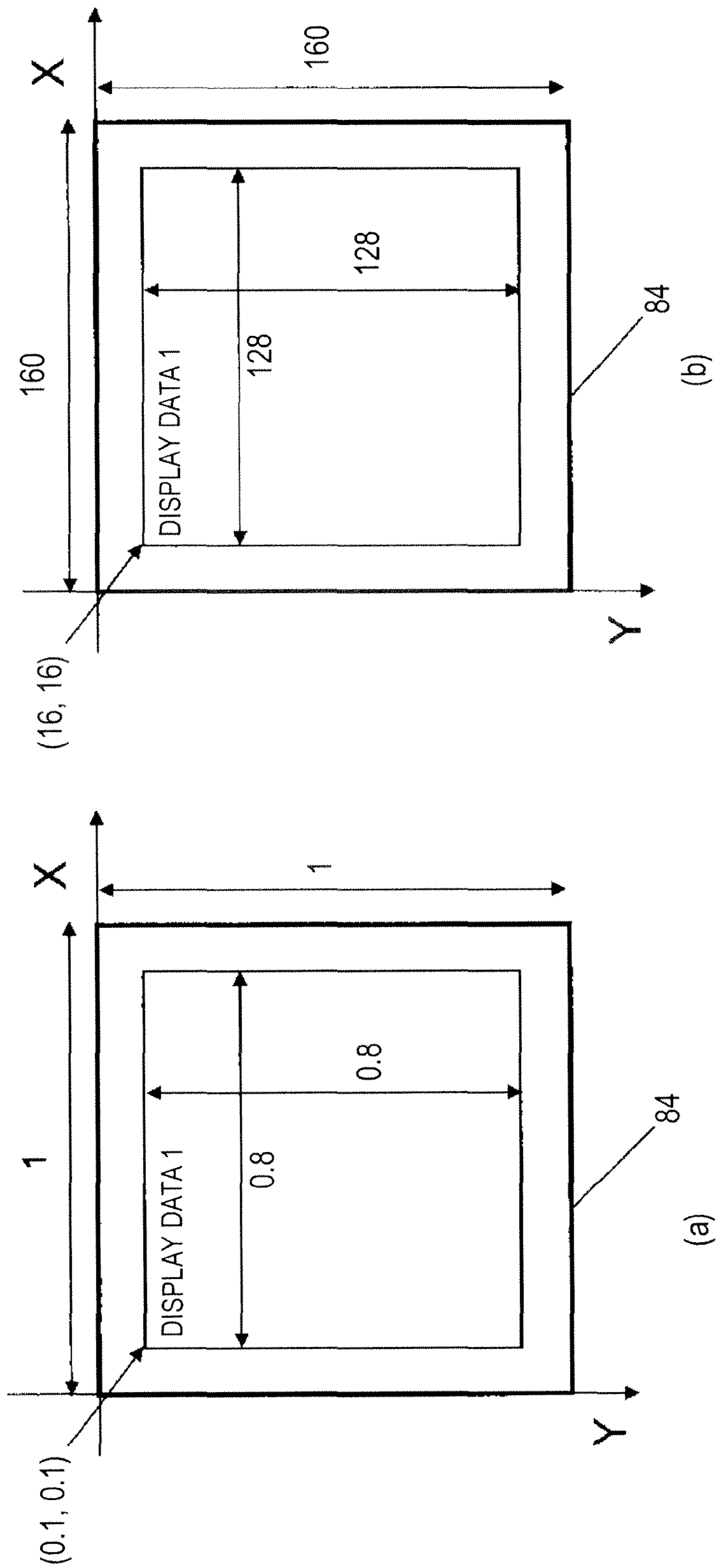

X
Y
160
160
128
128
DISPLAY DATA 1
(16, 16)
84
(b)
X
Y
1
1
0.8
0.8
DISPLAY DATA 1
(0.1, 0.1)
84
(a)

*FIG. 6*

(a) ITEM LIST REGION INFORMATION

| CURRENT ITEM SIZE | | CURRENT NUMBERS OF ROWS AND COLUMNS | | CURRENT ITEM LIST REGION SIZE | |
|---|---|---|---|---|---|
| WIDTH | HEIGHT | ROW | COLUMN | WIDTH | HEIGHT |
| 160 | 160 | 4 | 3 | 480 | 640 |

(b) COORDINATES OF SELECTED ITEM

| X COORDINATE | Y COORDINATE |
|---|---|
| 0 | 480 |

(c) DATA ARRANGEMENT INFORMATION

| ITEM NUMBER | DISPLAY DATA 1 | | | | DISPLAY DATA 2 | | | | DISPLAY DATA 3 | | | |
|---|---|---|---|---|---|---|---|---|---|---|---|---|
| | X COOR-DINATE | Y COOR-DINATE | WIDTH | HEIGHT | X COOR-DINATE | Y COOR-DINATE | WIDTH | HEIGHT | X COOR-DINATE | Y COOR-DINATE | WIDTH | HEIGHT |
| 1 | 16 | 16 | 128 | 128 | – | – | – | – | – | – | – | – |
| ... | ... | ... | ... | ... | ... | ... | ... | ... | ... | ... | ... | ... |
| 10 | 16 | 496 | 128 | 128 | – | – | – | – | – | – | – | – |

(d) DEFAULT ITEM SIZE (WIDTH)

| |
|---|
| 160 |

(e) MAGNIFICATION FACTOR CONTROL INFORMATION

| MAXIMUM MAGNIFICATION FACTOR | MINIMUM MAGNIFICATION FACTOR | CURRENT MAGNIFICATION FACTOR |
|---|---|---|
| 3 | 0.75 | 1 |

(f) SELECTED ITEM

| |
|---|
| 10 |

(g) TOUCH PANEL INFORMATION

| X COORDINATE | Y COORDINATE | STATE OF A FINGER |
|---|---|---|
| -1 | -1 | RELEASE |

*FIG. 7*

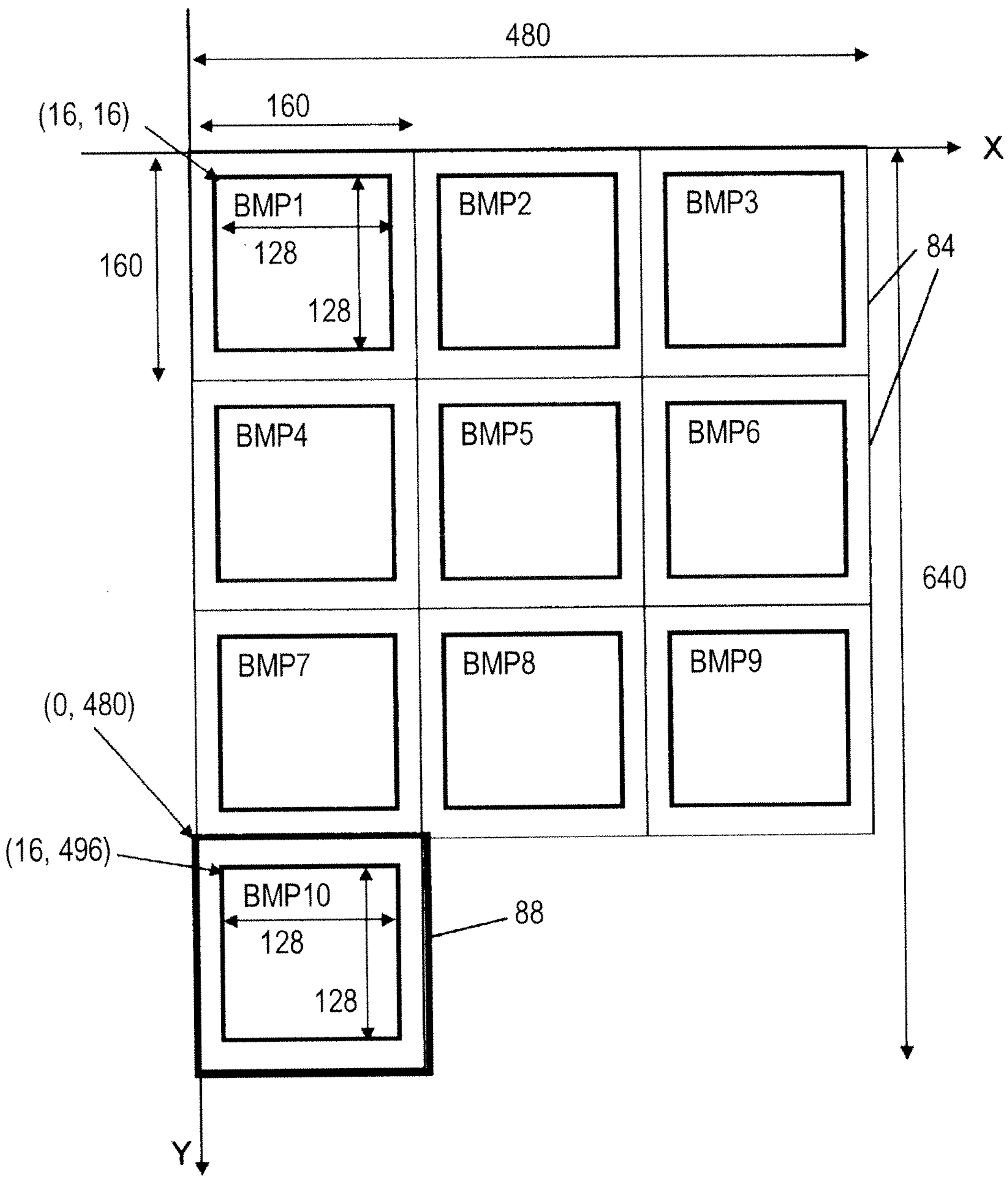
480
160
(16, 16)
X
160
BMP1
128
128
BMP2
BMP3
84
BMP4
BMP5
BMP6
640
BMP7
BMP8
BMP9
(0, 480)
(16, 496)
BMP10
128
128
88
Y

FIG. 8

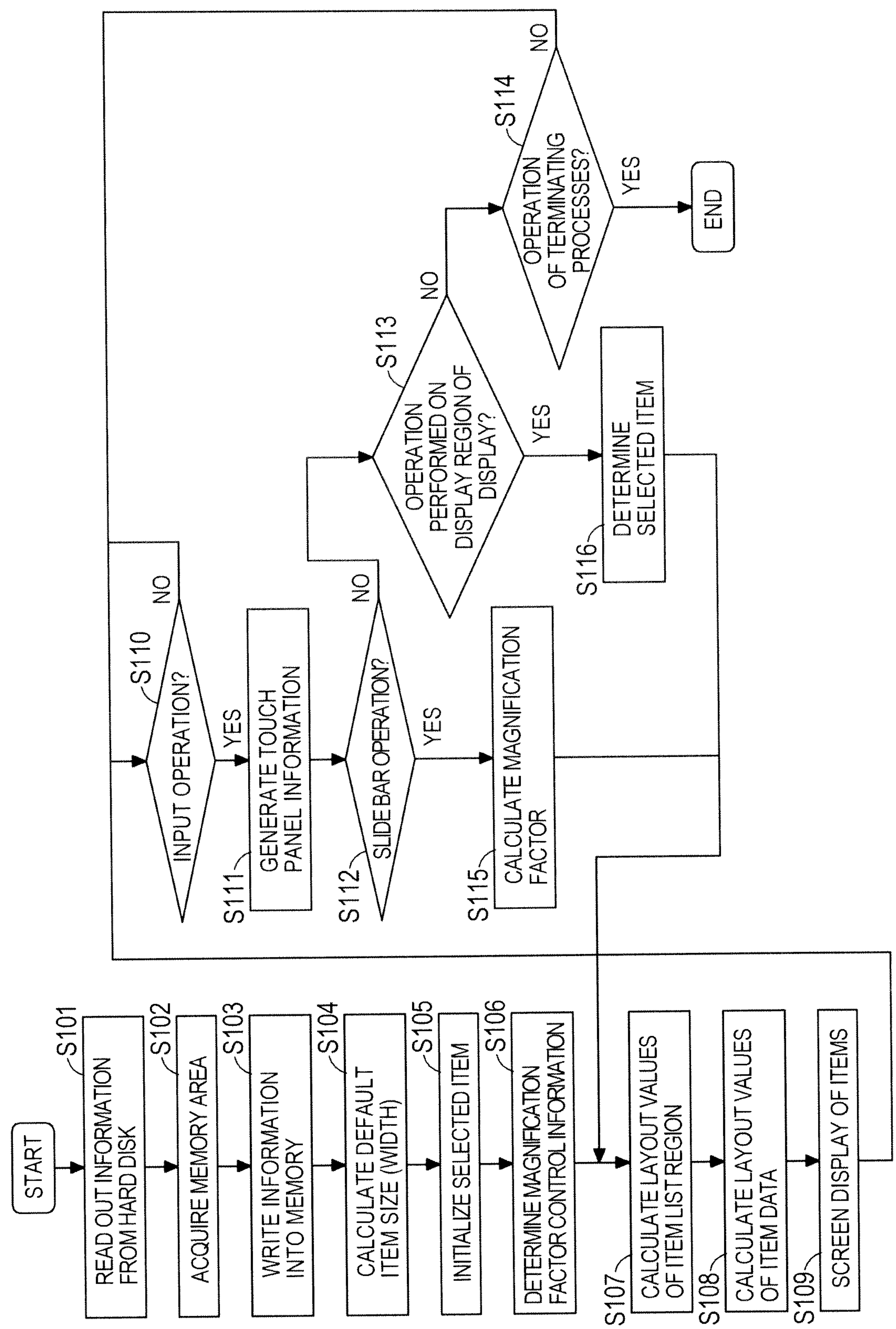
START
S101
READ OUT INFORMATION FROM HARD DISK
S102
ACQUIRE MEMORY AREA
S103
WRITE INFORMATION INTO MEMORY
S104
CALCULATE DEFAULT ITEM SIZE (WIDTH)
S105
INITIALIZE SELECTED ITEM
S106
DETERMINE MAGNIFICATION FACTOR CONTROL INFORMATION
S107
CALCULATE LAYOUT VALUES OF ITEM LIST REGION
S108
CALCULATE LAYOUT VALUES OF ITEM DATA
S109
SCREEN DISPLAY OF ITEMS
S110
INPUT OPERATION?
YES
NO
S111
GENERATE TOUCH PANEL INFORMATION
S112
SLIDE BAR OPERATION?
YES
NO
S113
OPERATION PERFORMED ON DISPLAY REGION OF DISPLAY?
YES
NO
S114
OPERATION OF TERMINATING PROCESSES?
YES
NO
END
S115
CALCULATE MAGNIFICATION FACTOR
S116
DETERMINE SELECTED ITEM

*FIG. 9*

TOUCH PANEL INFORMATION

| X COORDINATE | Y COORDINATE | STATE OF A FINGER |
|---|---|---|
| 54 | 660 | PRESS |

*FIG. 10*

(a) ITEM LIST REGION INFORMATION

| CURRENT ITEM SIZE | | CURRENT NUMBERS OF ROWS AND COLUMNS | | CURRENT ITEM LIST REGION SIZE | |
|---|---|---|---|---|---|
| WIDTH | HEIGHT | ROW | COLUMN | WIDTH | HEIGHT |
| 200 | 240 | 5 | 2 | 400 | 1200 |

(b) COORDINATES OF THE SELECTED ITEM

| X COORDINATE | Y COORDINATE |
|---|---|
| 200 | 960 |

(c) DATA ARRANGEMENT INFORMATION

| ITEM NUMBER | DISPLAY DATA 1 | | | | DISPLAY DATA 2 | | | | DISPLAY DATA 3 | | | |
|---|---|---|---|---|---|---|---|---|---|---|---|---|
| | X COOR-DINATE | Y COOR-DINATE | WIDTH | HEIGHT | X COOR-DINATE | Y COOR-DINATE | WIDTH | HEIGHT | X COOR-DINATE | Y COOR-DINATE | WIDTH | HEIGHT |
| 1 | 20 | 20 | 160 | 160 | 20 | 200 | 160 | 20 | – | – | – | – |
| ... | ... | ... | ... | ... | ... | ... | ... | ... | ... | ... | ... | ... |
| 10 | 220 | 980 | 160 | 160 | 220 | 1160 | 360 | 220 | – | – | – | – |

(d) MAGNIFICATION FACTOR CONTROL INFORMATION

| MAXIMUM MAGNIFICATION FACTOR | MINIMUM MAGNIFICATION FACTOR | CURRENT MAGNIFICATION FACTOR |
|---|---|---|
| 3 | 0.75 | 1.25 |

(e) TOUCH PANEL INFORMATION

| X COORDINATE | Y COORDINATE | STATE OF A FINGER |
|---|---|---|
| 107 | 660 | SLIDE |

*FIG. 11*

(a) ITEM LIST REGION INFORMATION

| CURRENT ITEM SIZE | | CURRENT NUMBERS OF ROWS AND COLUMNS | | CURRENT ITEM LIST REGION SIZE | |
|---|---|---|---|---|---|
| WIDTH | HEIGHT | ROW | COLUMN | WIDTH | HEIGHT |
| 200 | 240 | 5 | 2 | 400 | 1200 |

(b) COORDINATES OF THE SELECTED ITEM

| X COORDINATE | Y COORDINATE |
|---|---|
| 200 | 960 |

(c) DATA ARRANGEMENT INFORMATION

| ITEM NUMBER | DISPLAY DATA 1 | | | | DISPLAY DATA 2 | | | | DISPLAY DATA 3 | | | |
|---|---|---|---|---|---|---|---|---|---|---|---|---|
| | X COOR-DINATE | Y COOR-DINATE | WIDTH | HEIGHT | X COOR-DINATE | Y COOR-DINATE | WIDTH | HEIGHT | X COOR-DINATE | Y COOR-DINATE | WIDTH | HEIGHT |
| 1 | 20 | 20 | 160 | 160 | 20 | 200 | 160 | 20 | – | – | – | – |
| ... | ... | ... | ... | ... | ... | ... | ... | ... | ... | ... | ... | ... |
| 10 | 220 | 980 | 160 | 160 | 220 | 1160 | 360 | 220 | – | – | – | – |

(d) MAGNIFICATION FACTOR CONTROL INFORMATION

| MAXIMUM MAGNIFICATION FACTOR | MINIMUM MAGNIFICATION FACTOR | CURRENT MAGNIFICATION FACTOR |
|---|---|---|
| 3 | 0.75 | 1.25 |

(e) TOUCH PANEL INFORMATION

| X COORDINATE | Y COORDINATE | STATE OF A FINGER |
|---|---|---|
| 107 | 660 | RELEASE |

FIG. 12

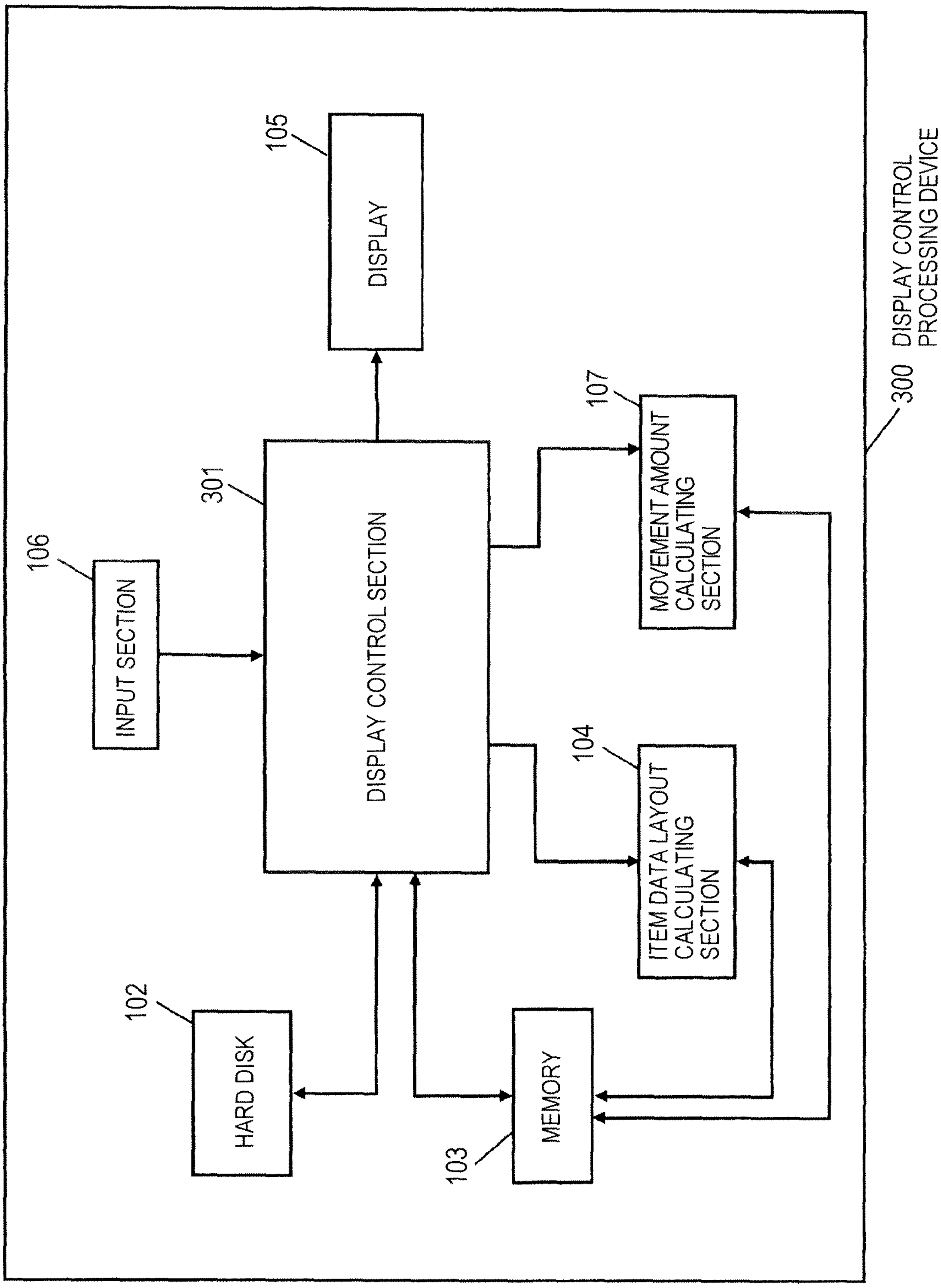
105
DISPLAY
106
INPUT SECTION
301
DISPLAY CONTROL SECTION
107
MOVEMENT AMOUNT CALCULATING SECTION
104
ITEM DATA LAYOUT CALCULATING SECTION
102
HARD DISK
103
MEMORY
300 DISPLAY CONTROL PROCESSING DEVICE

FIG. 13

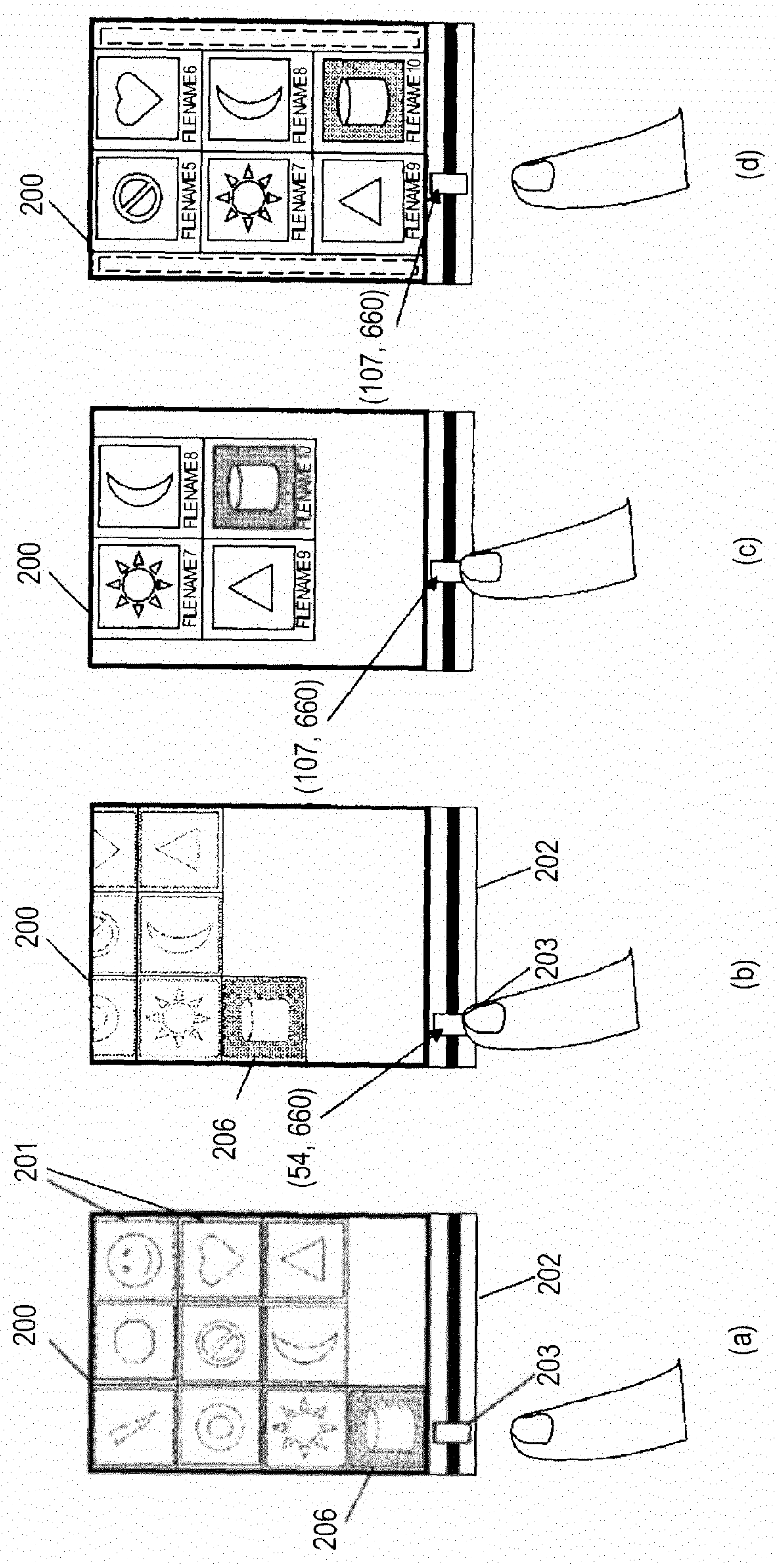
200
201
202
203
206
(a)
(54, 660)
(b)
(107, 660)
(c)
FILENAME5
FILENAME6
FILENAME7
FILENAME8
FILENAME9
FILENAME10
(d)

*FIG. 14*

(a) MOVEMENT AMOUNTS

| X | Y |
|---|---|
| 0 | 0 |

(b) DISPLAY POSITION DETERMINATION FORM

CENTERING

(c) ENLARGEMENT INSTRUCTION CONTENT

ENLARGEMENT TERMINATION INSTRUCTION

FIG. 15

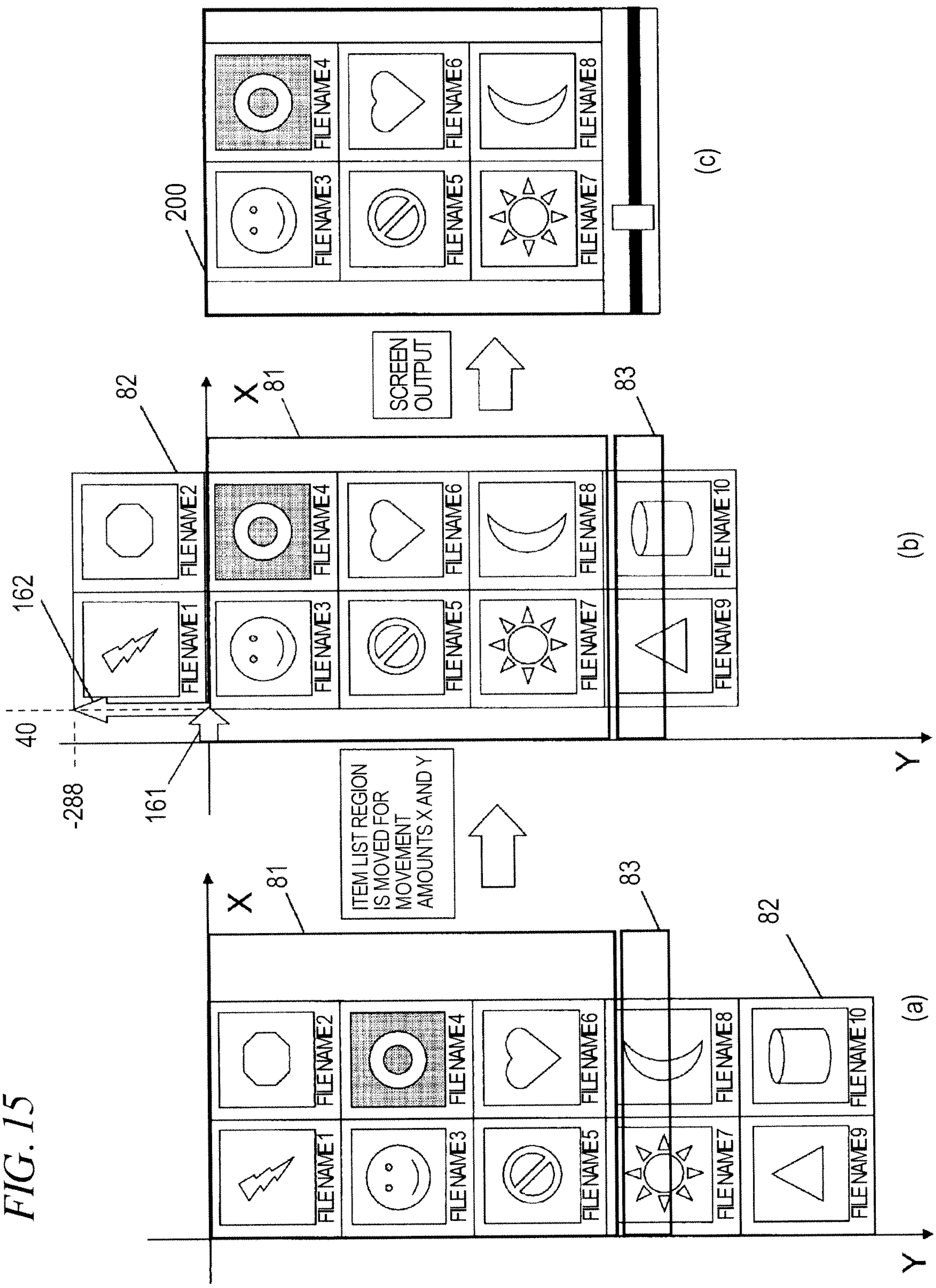
X
Y
81
82
83
FILE NAME1
FILE NAME2
FILE NAME3
FILE NAME4
FILE NAME5
FILE NAME6
FILE NAME7
FILE NAME8
FILE NAME9
FILE NAME10
(a)
ITEM LIST REGION IS MOVED FOR MOVEMENT AMOUNTS X AND Y
-288
40
161
162
(b)
SCREEN OUTPUT
200
(c)

FIG. 16

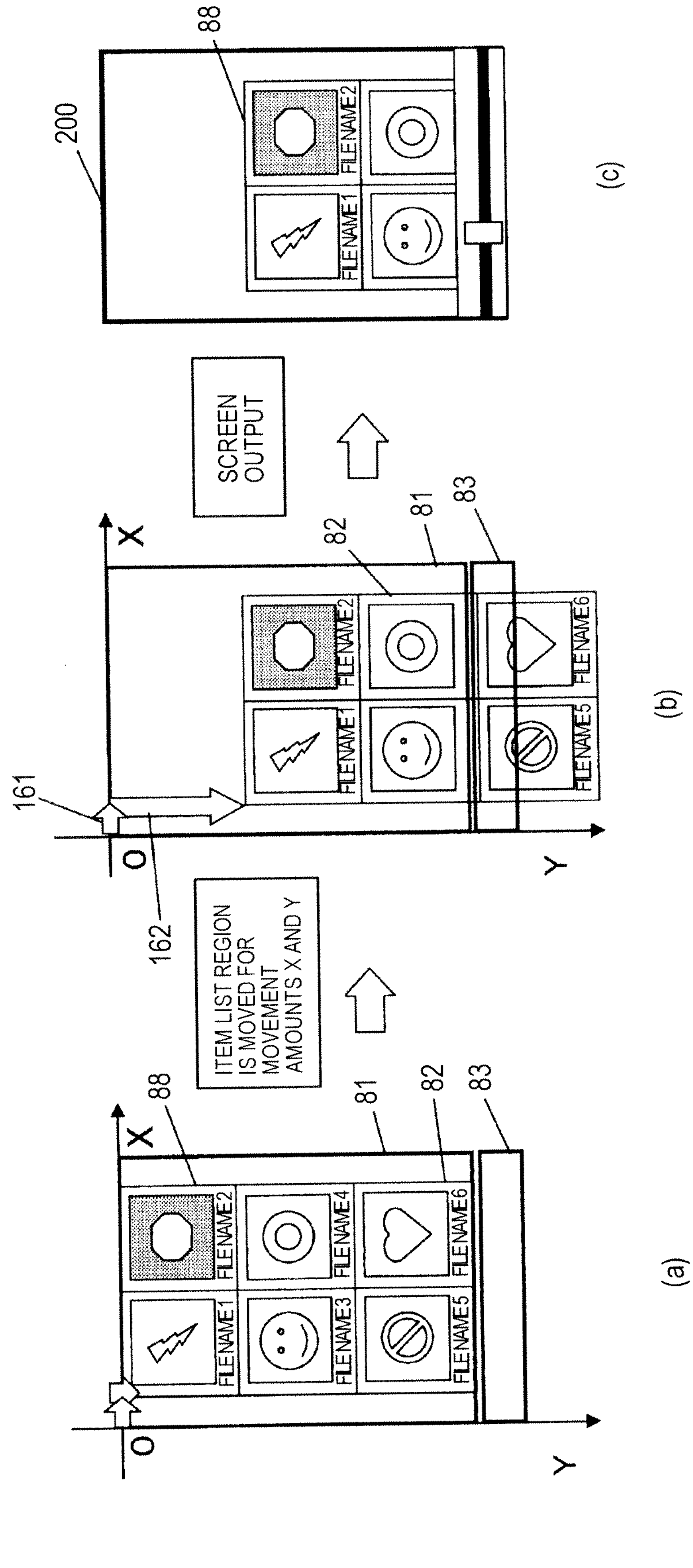
X
Y
O
88
81
82
83
FILENAME1
FILENAME2
FILENAME3
FILENAME4
FILENAME5
FILENAME6
(a)
ITEM LIST REGION IS MOVED FOR MOVEMENT AMOUNTS X AND Y
161
162
(b)
SCREEN OUTPUT
200
(c)

FIG. 17

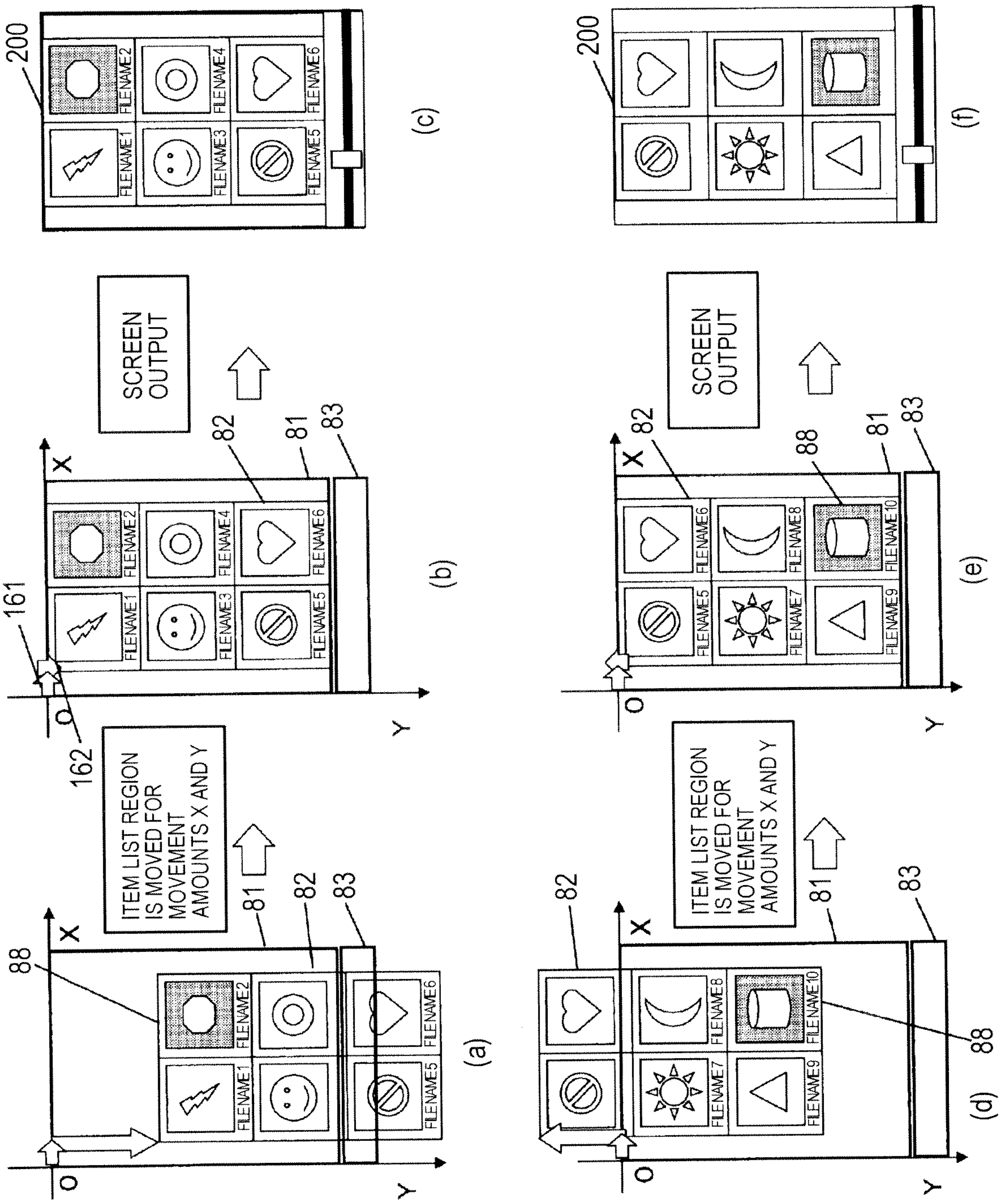
ITEM LIST REGION IS MOVED FOR MOVEMENT AMOUNTS X AND Y
SCREEN OUTPUT
ITEM LIST REGION IS MOVED FOR MOVEMENT AMOUNTS X AND Y
SCREEN OUTPUT
FILENAME1
FILENAME2
FILENAME3
FILENAME4
FILENAME5
FILENAME6
FILENAME7
FILENAME8
FILENAME9
FILENAME10
X
Y
O
81
82
83
88
161
162
200
(a)
(b)
(c)
(d)
(e)
(f)

FIG. 18

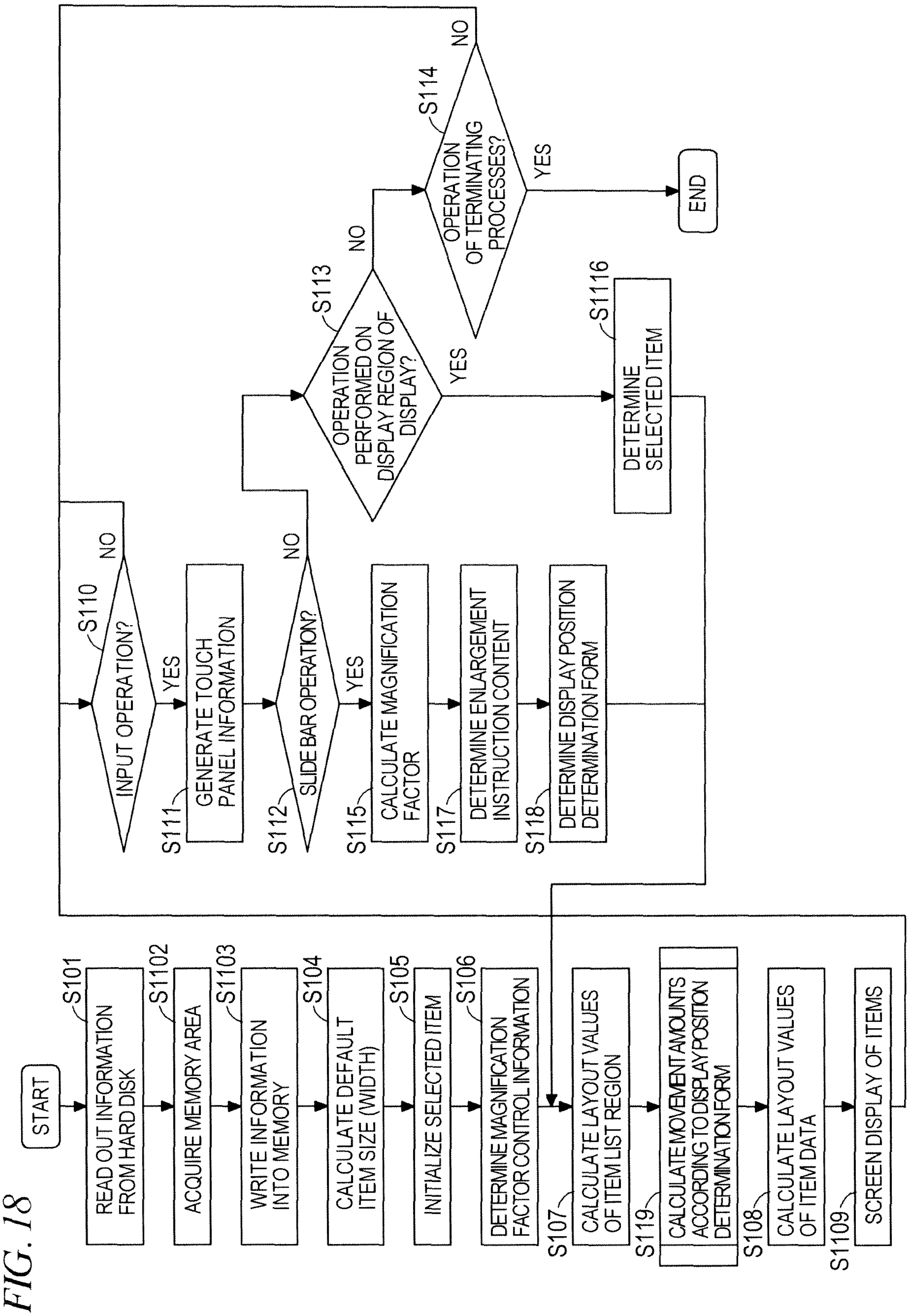
START
S101 READ OUT INFORMATION FROM HARD DISK
S1102 ACQUIRE MEMORY AREA
S1103 WRITE INFORMATION INTO MEMORY
S104 CALCULATE DEFAULT ITEM SIZE (WIDTH)
S105 INITIALIZE SELECTED ITEM
S106 DETERMINE MAGNIFICATION FACTOR CONTROL INFORMATION
S107 CALCULATE LAYOUT VALUES OF ITEM LIST REGION
S119 CALCULATE MOVEMENT AMOUNTS ACCORDING TO DISPLAY POSITION DETERMINATION FORM
S108 CALCULATE LAYOUT VALUES OF ITEM DATA
S1109 SCREEN DISPLAY OF ITEMS
S110 INPUT OPERATION?
YES
NO
S111 GENERATE TOUCH PANEL INFORMATION
S112 SLIDE BAR OPERATION?
YES
NO
S115 CALCULATE MAGNIFICATION FACTOR
S117 DETERMINE ENLARGEMENT INSTRUCTION CONTENT
S118 DETERMINE DISPLAY POSITION DETERMINATION FORM
S113 OPERATION PERFORMED ON DISPLAY REGION OF DISPLAY?
YES
NO
S1116 DETERMINE SELECTED ITEM
S114 OPERATION OF TERMINATING PROCESSES?
YES
NO
END

FIG. 19

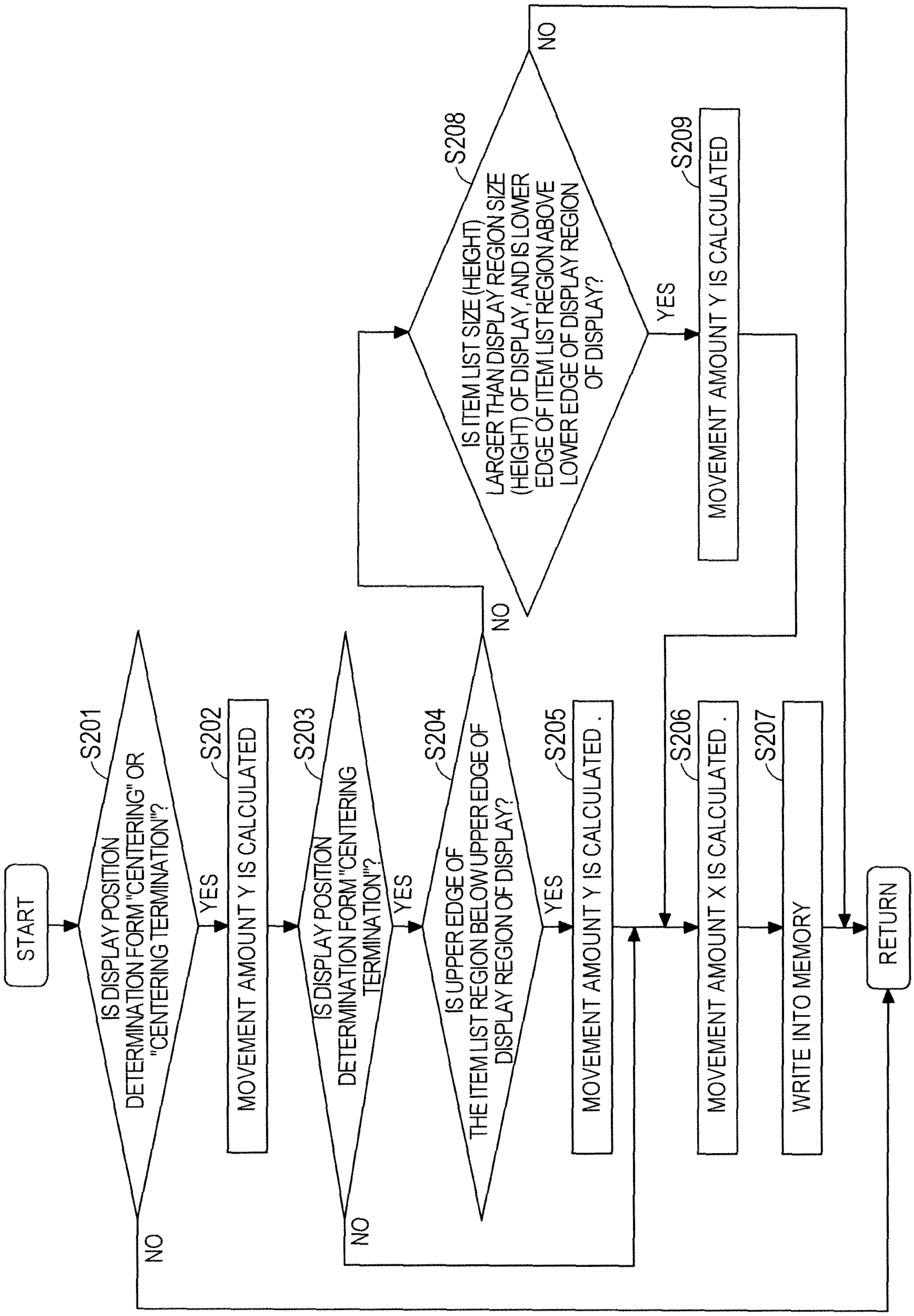
START
IS DISPLAY POSITION DETERMINATION FORM "CENTERING" OR "CENTERING TERMINATION"?
S201
YES
NO
MOVEMENT AMOUNT Y IS CALCULATED
S202
IS DISPLAY POSITION DETERMINATION FORM "CENTERING TERMINATION"?
S203
YES
NO
IS UPPER EDGE OF THE ITEM LIST REGION BELOW UPPER EDGE OF DISPLAY REGION OF DISPLAY?
S204
YES
NO
MOVEMENT AMOUNT Y IS CALCULATED .
S205
MOVEMENT AMOUNT X IS CALCULATED .
S206
WRITE INTO MEMORY
S207
RETURN
IS ITEM LIST SIZE (HEIGHT) LARGER THAN DISPLAY REGION SIZE (HEIGHT) OF DISPLAY, AND IS LOWER EDGE OF ITEM LIST REGION ABOVE LOWER EDGE OF DISPLAY REGION OF DISPLAY?
S208
YES
NO
MOVEMENT AMOUNT Y IS CALCULATED
S209

FIG. 20

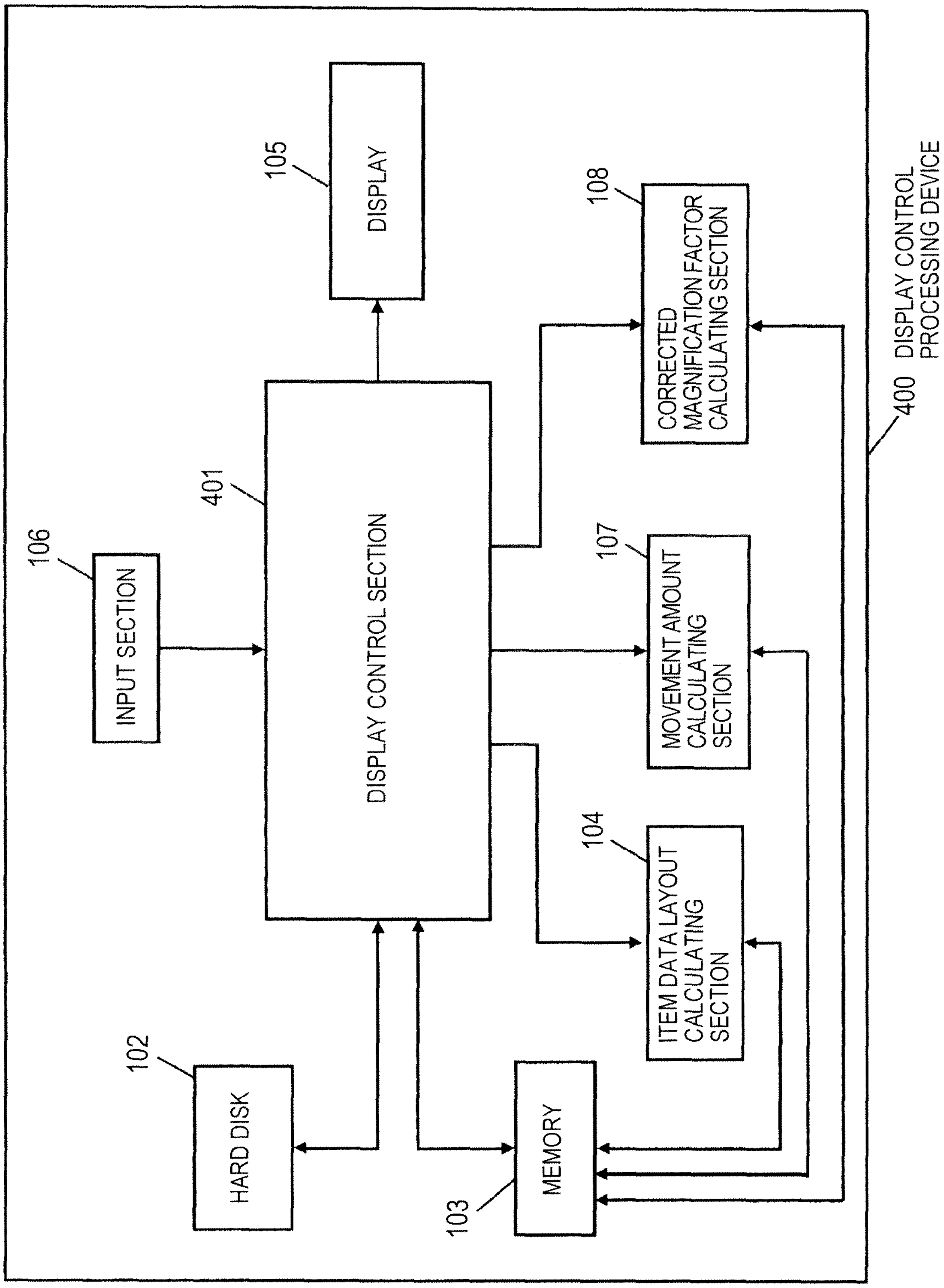
105
DISPLAY
106
INPUT SECTION
401
DISPLAY CONTROL SECTION
108
CORRECTED MAGNIFICATION FACTOR CALCULATING SECTION
107
MOVEMENT AMOUNT CALCULATING SECTION
104
ITEM DATA LAYOUT CALCULATING SECTION
102
HARD DISK
103
MEMORY
400 DISPLAY CONTROL PROCESSING DEVICE

FIG. 21

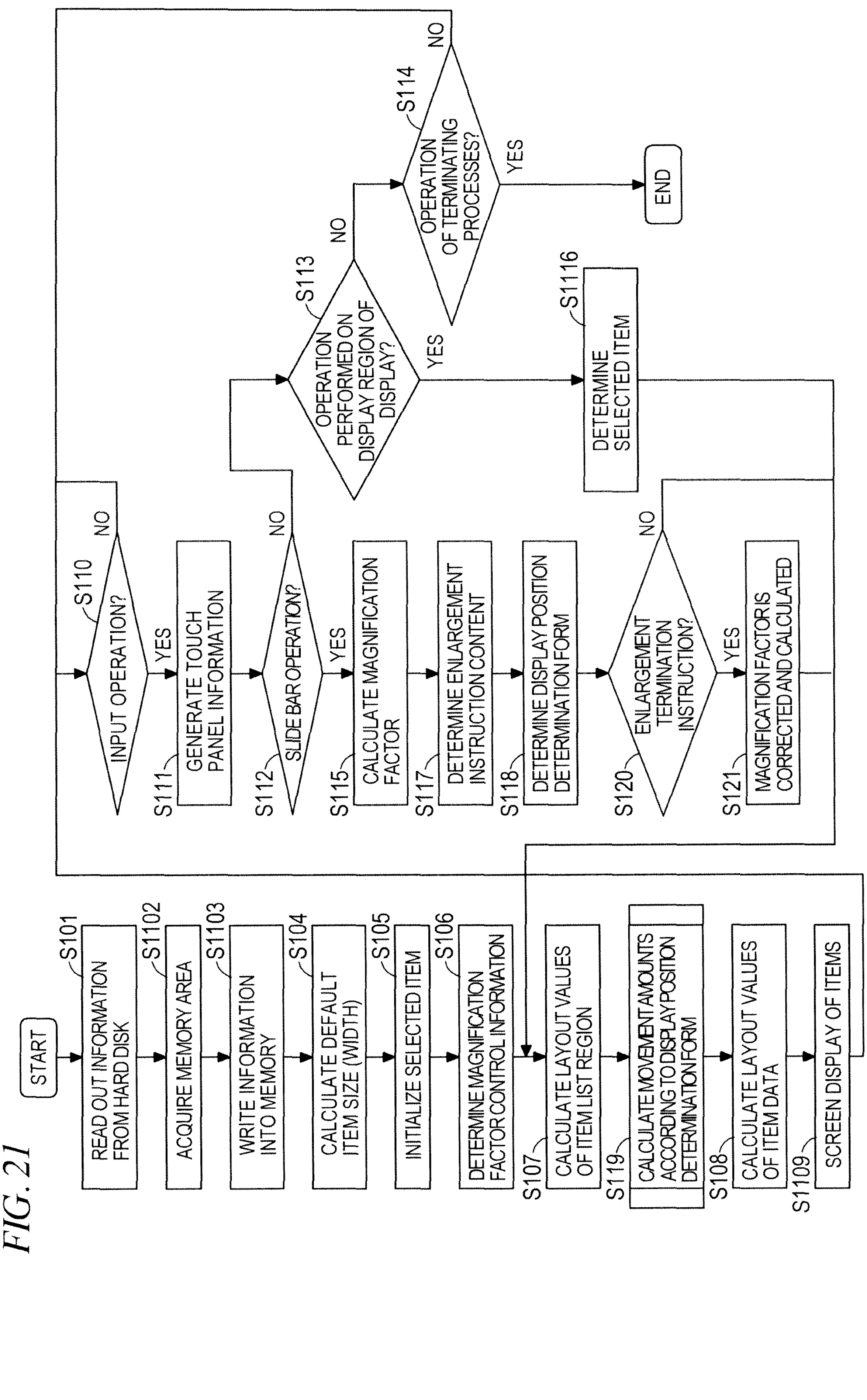
START
S101 READ OUT INFORMATION FROM HARD DISK
S1102 ACQUIRE MEMORY AREA
S1103 WRITE INFORMATION INTO MEMORY
S104 CALCULATE DEFAULT ITEM SIZE (WIDTH)
S105 INITIALIZE SELECTED ITEM
S106 DETERMINE MAGNIFICATION FACTOR CONTROL INFORMATION
S107 CALCULATE LAYOUT VALUES OF ITEM LIST REGION
S119 CALCULATE MOVEMENT AMOUNTS ACCORDING TO DISPLAY POSITION DETERMINATION FORM
S108 CALCULATE LAYOUT VALUES OF ITEM DATA
S1109 SCREEN DISPLAY OF ITEMS
S110 INPUT OPERATION?
YES
NO
S111 GENERATE TOUCH PANEL INFORMATION
S112 SLIDE BAR OPERATION?
YES
NO
S115 CALCULATE MAGNIFICATION FACTOR
S117 DETERMINE ENLARGEMENT INSTRUCTION CONTENT
S118 DETERMINE DISPLAY POSITION DETERMINATION FORM
S120 ENLARGEMENT TERMINATION INSTRUCTION?
YES
NO
S121 MAGNIFICATION FACTOR IS CORRECTED AND CALCULATED
S113 OPERATION PERFORMED ON DISPLAY REGION OF DISPLAY?
YES
NO
S1116 DETERMINE SELECTED ITEM
S114 OPERATION OF TERMINATING PROCESSES?
YES
NO
END

*FIG. 22*

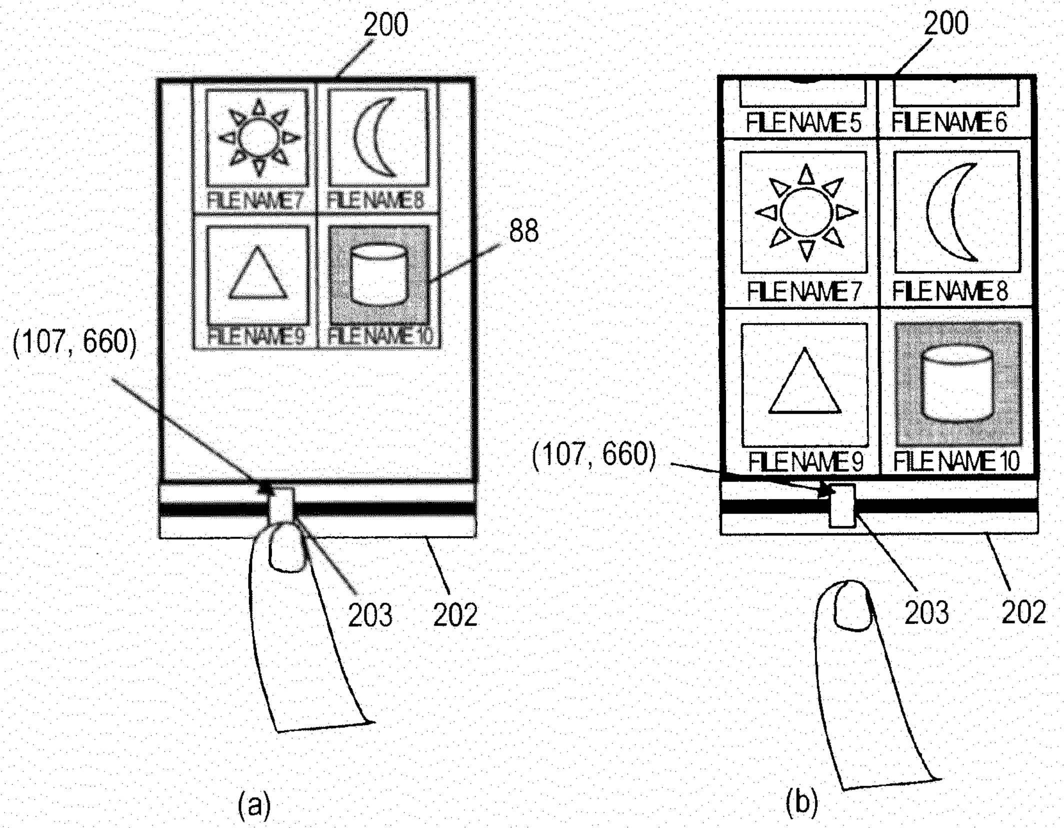
200
FILE NAME7
FILE NAME8
88
FILE NAME9
FILE NAME 10
(107, 660)
203
202
(a)
200
FILE NAME 5
FILE NAME 6
FILE NAME 7
FILE NAME 8
FILE NAME 9
FILE NAME 10
(107, 660)
203
202
(b)

FIG. 23

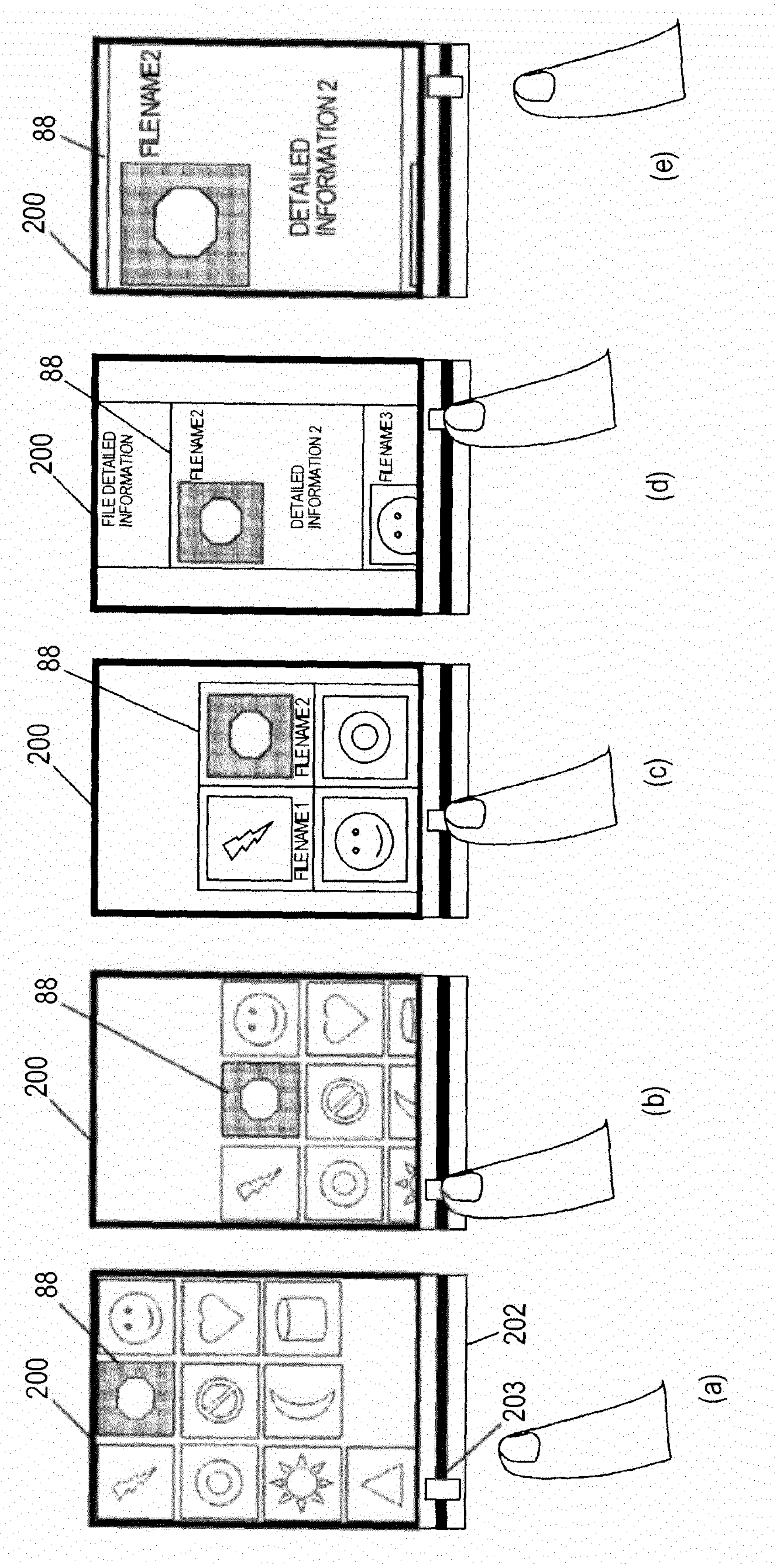

200
88
FILE NAME2
DETAILED INFORMATION 2
(e)
FILE DETAILED INFORMATION
FILE NAME3
(d)
FILE NAME1
(c)
(b)
202
203
(a)

**INTERNATIONAL SEARCH REPORT**

International application No.
PCT/JP2011/001361

A. CLASSIFICATION OF SUBJECT MATTER
*G06F3/048*(2006.01)i

According to International Patent Classification (IPC) or to both national classification and IPC

B. FIELDS SEARCHED

Minimum documentation searched (classification system followed by classification symbols)
G06F3/048

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-080709 A (Hitachi, Ltd.), 16 April 2009 (16.04.2009), entire text; all drawings & US 2009/0128507 A1 | 1-6 |
| A | JP 2002-055807 A (International Business Machines Corp.), 20 February 2002 (20.02.2002), entire text; all drawings & US 6983424 B1 & EP 1174787 A2 & TW 542998 B & KR 2002-0000714 A & CN 1337619 A & CA 2346605 A1 | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 June, 2011 (07.06.11) | 21 June, 2011 (21.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/001361

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-269448 A (Sony Computer Entertainment Inc.),<br>06 November 2008 (06.11.2008),<br>entire text; all drawings<br>& US 2010/0085380 A1 & EP 2141578 A1<br>& WO 2008/136151 A1 | 1-6 |
| A | JP 8-263255 A (Canon Inc.),<br>11 October 1996 (11.10.1996),<br>entire text; all drawings<br>& US 2002/0032696 A1 & US 7336279 B1<br>& EP 717346 A2 & EP 1074923 A2<br>& EP 1515248 A2 | 1-6 |
| A | JP 2007-018343 A (Ricoh Co., Ltd.),<br>25 January 2007 (25.01.2007),<br>entire text; all drawings<br>& US 2007/0011316 A1 | 1-6 |
| A | JP 2008-027001 A (Ricoh Co., Ltd.),<br>07 February 2008 (07.02.2008),<br>entire text; all drawings<br>& US 2008/0018670 A1 & EP 1903426 A1<br>& CN 101110084 A | 1-6 |
| A | JP 2006-092269 A (Hitachi Software Engineering Co., Ltd.),<br>06 April 2006 (06.04.2006),<br>entire text; all drawings<br>(Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4352518 B
- JP 2008234457 A
- JP 2010072032 A